(19) Europäisches Patentamt
European Patent Office
Office européen des brevets

(11) **EP 4 657 469 A1**

(12) **EUROPEAN PATENT APPLICATION**
published in accordance with Art. 153(4) EPC

(43) Date of publication:
**03.12.2025 Bulletin 2025/49**

(21) Application number: **24747354.9**

(22) Date of filing: **25.01.2024**

(51) International Patent Classification (IPC):
$H01B\ 13/00^{(2006.01)}$  $C01B\ 25/14^{(2006.01)}$
$H01B\ 1/06^{(2006.01)}$  $H01B\ 1/10^{(2006.01)}$
$H01M\ 4/62^{(2006.01)}$  $H01M\ 10/052^{(2010.01)}$
$H01M\ 10/0562^{(2010.01)}$

(52) Cooperative Patent Classification (CPC):
**C01B 25/14; H01B 1/06; H01B 1/10; H01B 13/00;
H01M 4/62; H01M 10/052; H01M 10/0562;
Y02E 60/10**

(86) International application number:
**PCT/JP2024/002199**

(87) International publication number:
**WO 2024/158030 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.01.2023 JP 2023011386**

(71) Applicant: **Idemitsu Kosan Co.,Ltd.
Tokyo 100-8321 (JP)**

(72) Inventors:
• **TOTSUKA, Shota
  Tokyo 100-8321 (JP)**
• **YAMAKI, Taro
  Tokyo 100-8321 (JP)**

(74) Representative: **Vossius & Partner
Patentanwälte Rechtsanwälte mbB
Siebertstrasse 3
81675 München (DE)**

(54) **METHOD FOR PRODUCING SULFIDE SOLID ELECTROLYTE**

(57)  A method for producing a sulfide solid electrolyte having a small particle diameter that is excellent in productivity is provided by a method for producing a sulfide solid electrolyte, including: mixing a raw material-containing material containing a lithium atom, a phosphorus atom, and a sulfur atom, and a poor solvent, so as to provide a first fluid; mixing the first fluid and a second fluid containing a good solvent by using an in-line mixer, so as to provide a precursor-containing solution; and feeding the precursor-containing solution to a heat medium that is a liquid or a gas heated to a temperature higher than a boiling point of the good solvent, so as to evaporate the good solvent.

[Fig. 1]

**Description**

Technical Field

The present invention relates to a method for producing a sulfide solid electrolyte.

Background Art

With the rapid spread of information-related devices, communication devices, and the like, such as personal computers, video cameras, and mobile phones, in recent years, development of batteries that are utilized as a power source therefor is considered to be important. While the batteries used in these applications have used an electrolytic solution containing a flammable organic solvent, a battery having a solid electrolyte layer in place of the electrolytic solution is being developed in view of the fact that making the battery all-solid-state can simplify the safety unit due to non-use of a flammable organic solvent in the battery, resulting in excellent production cost and productivity.

As a production method of a solid electrolyte, PTL 1 describes a method of feeding a liquid containing a solid electrolyte raw material and a solvent to a high-temperature medium, and evaporating the solvent thereby to deposit an argyrodite type crystal structure.

Citation List

Patent Literature

PTL 1: JP 2019-169459 A

Summary of Invention

Technical Problem

An object of the present invention is to provide a method for producing a sulfide solid electrolyte having excellent quality that is excellent in productivity.

Solution to Problem

The method for producing a sulfide solid electrolyte according to the present invention is a method for producing a sulfide solid electrolyte, including: mixing a raw material-containing material containing a lithium atom, a phosphorus atom, and a sulfur atom, and a poor solvent, so as to provide a precursor-containing slurry; mixing the precursor-containing slurry and a good solvent by using an in-line mixer, so as to provide a precursor-containing solution; and feeding the precursor-containing solution to a heat medium that is a liquid or a gas heated to a temperature higher than a boiling point of the good solvent, so as to evaporate the good solvent.

Advantageous Effects of Invention

The present invention can provide a method for producing a sulfide solid electrolyte having excellent quality that is excellent in productivity.

Brief Description of Drawings

[Fig. 1] Fig. 1 is a diagram showing one embodiment of an apparatus for producing a sulfide solid electrolyte that is capable of practicing the method for producing a sulfide solid electrolyte of the present embodiment.
[Fig. 2] Fig. 2 is the X-ray diffraction spectrum of the sulfide solid electrolyte obtained in Example 1.
[Fig. 3] Fig. 3 is the X-ray diffraction spectrum of the sulfide solid electrolyte obtained in Example 2.
[Fig. 4] Fig. 4 is the X-ray diffraction spectrum of the sulfide solid electrolyte obtained in Example 3.
[Fig. 5] Fig. 5 is the X-ray diffraction spectrum of the sulfide solid electrolyte obtained in Comparative Example 1.
[Fig. 6] Fig. 6 is the X-ray diffraction spectrum of the sulfide solid electrolyte obtained in Comparative Example 2.
[Fig. 7] Fig. 7 is the X-ray diffraction spectrum of the sulfide solid electrolyte obtained in Comparative Example 3.

Description of Embodiments

An embodiment of the present invention (which may be hereinafter referred to as a "present embodiment") will be described below. In the description herein, the upper limit values and the lower limit values relating to the numerical ranges accompanied with "or more", "or less", and "to" are numerical values that can be optionally combined, and the values in the examples can be used as the upper limit values and the lower limit values. The preferred provisions can be optionally adopted. Specifically, one of the preferred provisions can be adopted by combining with other one of or multiple preferred provisions. A combination of the preferred provisions can be considered as being more preferred.

(Knowledge obtained by Present Inventors reaching Present Invention)

The present inventors have made earnest investigations for solving the problem, and as a result, have found the following matters, and thus the present invention has been completed.

The method described in PTL 1 discloses a method of feeding a solid electrolyte raw material-containing liquid containing a solid electrolyte raw material having ethanol added thereto, to a high-temperature medium, and evaporating ethanol thereby to deposit an argyrodite type crystal structure.

The earnest investigations by the present inventors have revealed that the long-term contact between the solid electrolyte precursor and ethanol may cause production of impurities through side-reaction, which make the ionic conductivity of the resulting solid electrolyte insufficient.

Under the circumstances, the present inventors have found that a sulfide solid electrolyte excellent in quality can be efficiently produced by shortening the contact time between the solid electrolyte precursor and ethanol by using an in-line mixer.

(Embodiments of Present Embodiment)

The method for producing a sulfide solid electrolyte according to the first embodiment of the present embodiment is

a method for producing a sulfide solid electrolyte, including: mixing a raw material-containing material containing a lithium atom, a phosphorus atom, and a sulfur atom, and a poor solvent, so as to provide a first fluid; mixing the first fluid and a second fluid containing a good solvent by using an in-line mixer, so as to provide a precursor-containing solution; and feeding the precursor-containing solution to a heat medium that is a liquid or a gas heated to a temperature higher than a boiling point of the good solvent, so as to evaporate the good solvent.

In the method for producing a sulfide solid electrolyte of the present embodiment, the first fluid is formed by mixing a raw material-containing material and a poor solvent, and then while restricting the direct contact between the solid electrolyte raw material and a good solvent, is mixed with the second fluid containing a good solvent by using an in-line mixer to provide a precursor-containing solution, and then the good solvent is efficiently removed by feeding the precursor-containing solution to a heat medium heated to a high temperature. According to the configuration, the side reaction caused through contact between the solid electrolyte raw material and the good solvent can be suppressed, and the quality of the resulting solid electrolyte can be enhanced.

Furthermore, the method for producing a sulfide solid electrolyte of the present embodiment includes a continuous process including mixing the first fluid and the second fluid by using an in-line mixer, and feeding the precursor-containing solution to the heat medium to remove the good solvent, and therefore is a production method excellent in productivity.

In the production method of the present embodiment, the "precursor" denotes a precursor of a solid electrolyte that becomes the sulfide solid electrolyte through evaporation of the good solvent. It is considered that by mixing the raw material-containing material with the poor solvent and then mixing with the good solvent, the solid electrolyte raw material contained in the raw material-containing material is homogeneously mixed through the poor solvent and the good solvent, and in some cases, are reacted with each other to form a structure close to the sulfide solid electrolyte, resulting in the precursor, from which the good solvent is removed to allow the reaction of the raw material to proceed, forming the sulfide solid electrolyte.

In the production method of the present embodiment, the good solvent contained in the precursor-containing solution is removed through contact with the heat medium heated to a high temperature, and thereby the precursor becomes the sulfide solid electrolyte arising in the heat medium.

In the production method of the present embodiment, furthermore, the first fluid is a mixture containing at least the precursor and the poor solvent, and is generally in the form of slurry. In other words, the first fluid is generally a slurry containing the precursor of a solid electrolyte. The "precursor-containing solution" is a solution obtained by mixing at least the precursor and the good solvent. Both of them each may further contain an unreacted raw material and the like.

The second fluid may be a fluid containing only the good solvent, may be a fluid obtained in such a manner that an additional component, such as a dispersion medium, described later is dissolved or dispersed therein by mixing, or may be a fluid obtained by dispersing the good solvent in an additional component.

The method for producing a sulfide solid electrolyte according to the second embodiment of the present embodiment is the first embodiment, in which

the raw material-containing material further contains a halogen atom.

The method for producing a sulfide solid electrolyte according to the third embodiment of the present embodiment is the first or second embodiment, in which

the good solvent is an alcohol.

In the case where the good solvent is an alcohol, the solid electrolyte raw material is easily dissolved therein, thereby providing the electrolyte precursor more efficiently, and as a result, the production efficiency can be enhanced, and the sulfide solid electrolyte having high quality can be easily produced.

The method for producing a sulfide solid electrolyte according to the fourth embodiment of the present embodiment is any one of the first to third embodiments, in which the poor solvent contains a complexing agent.

The alcohol solvent may react with the electrolyte raw material and the synthesized solid electrolyte itself to decrease the ionic conductivity, and therefore the solvent preferably contains a complexing agent or a hydrocarbon solvent described later.

The complexing agent herein means a compound that is capable of forming a complex with the solid electrolyte raw material contained in the raw material-containing material. The use of the poor solvent that is a complexing agent accelerates the formation of a complex, which facilitates the retention of the homogeneous dispersion state of the solid electrolyte raw material in the precursor-containing slurry. Accordingly, the solid electrolyte raw material can exclusively contribute to the formation of the sulfide solid electrolyte, and as a result, the sulfide solid electrolyte having a higher ionic conductivity can be easily obtained.

The method for producing a sulfide solid electrolyte according to the fifth embodiment of the present embodiment is the fourth embodiment, in which

the complexing agent is a compound containing a nitrogen atom and/or an oxygen atom as a hetero atom.

The use of the compound as the complexing agent is preferred since the formation of the complex is accelerated thereby, and the sulfide solid electrolyte having a higher ionic conductivity can be easily obtained as well as the production efficiency is enhanced.

The method for producing a sulfide solid electrolyte according to the sixth embodiment of the present embodiment is any one of the first to fifth embodiments, in which

the second fluid further contains a dispersion medium.

In the case where the second fluid further contains a dispersion medium, the precursor-containing solution obtained by mixing the second fluid with the first fluid can be obtained in a state where the solution is dispersed in the dispersion medium. In the case where the dispersed matter obtained in this manner is fed to the heat medium, the resulting sulfide solid electrolyte has a smaller particle diameter.

The method for producing a sulfide solid electrolyte according to the seventh embodiment of the present embodiment is the sixth embodiment, in which

the dispersion medium is one or more kind selected from a hydrocarbon compound and an ether compound.

The dispersion medium used is preferably a compound that is hard to degrade the resulting sulfide solid electrolyte, and specific examples thereof include an aromatic hydrocarbon compound and ether compound.

The method for producing a sulfide solid electrolyte according to the eighth embodiment of the present embodiment is any one of the second to seventh embodiments, in which

the halogen atom is one or more kind selected from a chlorine atom, a bromine atom, and an iodine atom.

The halogen atom contained in the raw material-containing material may vary depending on the sulfide solid electrolyte to be obtained, and for example, is preferably selected from a chlorine atom, a bromine atom, and an iodine atom.

The method for producing a sulfide solid electrolyte according to the ninth embodiment of the present embodiment is any one of the first to eighth embodiments, in which

the heat medium is heated to a temperature higher than a boiling point of the poor solvent, and the precursor-containing solution is fed to the heat medium, so as to also evaporate the poor solvent.

In the case where the temperature of the heat medium is made higher than the boiling point of the poor solvent, not only the good solvent, but also the poor solvent can be simultaneously removed in feeding the precursor-containing solution to the heat medium.

The method for producing a sulfide solid electrolyte according to the tenth embodiment of the present embodiment is any one of the first to ninth embodiments, in which

the precursor-containing solution is fed to the heat medium by injecting, dropping, or spraying therein.

Specific embodiments of the method of evaporating the solvent from the precursor-containing solution include a method of injecting, dropping, or spraying the precursor-containing solution in the heat medium. The heat medium is heated at least to a temperature higher than the boiling point of the good solvent, and thereby the good solvent contained in the precursor-containing solution is evaporated through the contact between the precursor-containing solution and the heat medium, depositing the sulfide solid electrolyte in the heat medium.

The method for producing a sulfide solid electrolyte according to the eleventh embodiment of the present embodiment is any one of the first to tenth embodiments, in which

the heat medium contains one or more kind selected from a hydrocarbon compound and an ether compound.

The heat medium used in the present embodiment may be any of a liquid heat medium and a gaseous heat medium, and for example, the liquid heat medium used is preferably a hydrocarbon compound or an ether compound since the use thereof having a low solubility of the sulfide solid electrolyte enables the efficient deposit of the sulfide solid electrolyte.

The method for producing a sulfide solid electrolyte according to the twelfth embodiment of the present embodiment is any one of the first to eleventh embodiments, in which

a period of time from the mixing of the first fluid and the second fluid to the contact between the precursor-containing solution and the heat medium is 20 minutes or less.

In the present embodiment, it is preferred that the period of time from the mixing of the first fluid and the second fluid to the contact between the precursor-containing solution and the heat medium is 20 minutes or less from the standpoint of suppressing the side reaction caused through the contact between the solid electrolyte raw material and the good solvent.

The apparatus for producing a sulfide solid electrolyte according to the thirteenth embodiment of the present embodiment is

an apparatus for producing a sulfide solid electrolyte, including: a first vessel including a mixing unit, mixing a raw material-containing material containing a lithium atom, a phosphorus atom, and a sulfur atom, and a poor solvent, and retaining a resulting first fluid; a second vessel retaining a second fluid containing a good solvent; a third vessel retaining a heat medium that is a liquid; and an in-line mixer, the in-line mixer being connected to be able to mix the first fluid fed from the first vessel and the second fluid fed from the second container and to feed a resulting mixture to the third vessel.

The apparatus for producing a sulfide solid electrolyte according to the fourteenth embodiment of the present embodiment is the thirteenth embodiment, in which

the raw material-containing material further contains a halogen atom.

The apparatus for producing a sulfide solid electrolyte according to the fifteenth embodiment of the present embodiment is

an apparatus for producing a sulfide solid electrolyte, including: a first vessel including a mixing unit, mixing a raw material-containing material containing a lithium atom, a phosphorus atom, and a sulfur atom, and a poor solvent, and retaining a resulting first fluid; a second vessel retaining a second fluid containing a good solvent; a flash dryer; and an in-line mixer, the in-line mixer being connected to be able to mix the first fluid fed from the first vessel and the second fluid fed from the second container and to feed a resulting mixture to the flash dryer.

The apparatus for producing a sulfide solid electrolyte according to the sixteenth embodiment of the present embodiment is the fifteenth embodiment, in which

the raw material-containing material further contains a halogen atom.

The production apparatuses according to the thirteenth and fourteenth embodiments and the production apparatuses according to the fifteenth and sixteenth embodiments each are a production apparatus that is preferred for practicing the production methods of the present embodiment. Specifically, the production apparatuses each include a first vessel retaining the first fluid, a second vessel retaining the second fluid, and an in-line mixer mixing the first fluid and the second fluid, and further include a third vessel or a flash dryer capable of evaporating the good solvent.

(Solid Electrolyte)

In the description herein, the "solid electrolyte" means an electrolyte that retains a solid state under a nitrogen atmosphere at 25°C. The solid electrolyte in the present embodiment is a solid electrolyte that contains a lithium atom, a sulfur atom, and a phosphorus atom, and has an ionic conductivity derived from a lithium atom.

The "solid electrolyte" encompasses both an amorphous solid electrolyte and a crystalline solid electrolyte.

In the description herein, the crystalline solid electrolyte is a solid electrolyte having an X-ray diffraction pattern in X-ray diffractometry that has observed therein peaks derived from the solid electrolyte, and the presence or absence of the peaks derived from the raw material of the solid electrolyte does not matter. Therefore, the crystalline solid electrolyte contains the crystal structure derived from the solid electrolyte, in which a part thereof may be the crystal structure derived from the solid electrolyte, or the entire thereof may be the crystal structure derived from the solid electrolyte. The crystalline solid electrolyte may contain an amorphous solid electrolyte as a part thereof, as long as having the X-ray diffraction pattern described above. Accordingly, the crystalline solid electrolyte encompasses the so-called glass ceramics, which is obtained by heating an amorphous solid electrolyte to the crystallization temperature or more.

In the description herein, the amorphous solid electrolyte is a solid electrolyte having an X-ray diffraction pattern in X-ray diffractometry that is a halo pattern having observed therein substantially no other peak than the peaks derived from the raw material, and the presence or absence of the peaks derived from the raw material of the solid electrolyte does not matter.

[Method for producing Sulfide Solid Electrolyte]

The method for producing a sulfide solid electrolyte of the present embodiment is
a method for producing a sulfide solid electrolyte, including: mixing a raw material-containing material containing a lithium atom, a phosphorus atom, and a sulfur atom, and a poor solvent to the raw material-containing material, so as to provide a first fluid; mixing the first fluid and a second fluid containing a good solvent by using an in-line mixer, so as to provide a precursor-containing solution; and feeding the precursor-containing solution to a heat medium that is a liquid or a gas heated to a temperature higher than a boiling point of the good solvent, so as to evaporate the good solvent.
It is preferred that the raw material-containing material further contains a halogen atom. Accordingly, it is preferred that the raw material-containing material contains a lithium atom, a phosphorus atom, a sulfur atom, and a halogen atom.

[Providing First Fluid]

The production method of the present embodiment includes mixing a raw material-containing material containing a lithium atom, a phosphorus atom, and a sulfur atom, and a poor solvent to the raw material-containing material, so as to provide a first fluid.
As for the production method of the present embodiment, the raw material-containing material will be first described.

(Raw Material-Containing Material)

The raw material-containing material used in the present embodiment contains a lithium atom, a phosphorus atom, and a sulfur atom, and preferably further contains a halogen atom, and more specifically, the raw material-containing material is a material containing a substance containing these atoms (which may be hereinafter referred to as a "solid electrolyte raw material"), and preferably a material containing two or more kinds of the solid electrolyte raw materials.
Representative examples of the solid electrolyte raw material include a raw material containing at least two kinds of atoms selected from the aforementioned atoms, for example, lithium sulfide; a lithium halide, such as lithium fluoride, lithium chloride, lithium bromide, and lithium iodide; and a phosphorus sulfide, such as diphosphorus trisulfide ($P_2S_3$) and diphosphorus pentasulfide ($P_2S_5$), and a raw material containing one kind of an atom selected from the aforementioned atoms, for example, an elemental halogen, such as fluorine ($F_2$), chlorine ($Cl_2$), bromine ($Br_2$), and iodine ($I_2$); elemental phosphorus and elemental sulfur.
Among the above, the solid electrolyte raw material containing a lithium atom, a sulfur atom, and a phosphorus atom is preferably lithium sulfide and a phosphorus sulfide, such as diphosphorus trisulfide ($P_2S_3$) and diphosphorus pentasulfide ($P_2S_5$), and the phosphorus sulfide is preferably diphosphorus pentasulfide.
Among the above, the solid electrolyte raw material containing a halogen atom is preferably an elemental halogen and a lithium halide.
The halogen atom contained in the raw material-containing material is preferably a fluorine atom, a chlorine atom, a bromine atom, and an iodine atom, and more preferably a chlorine atom, a bromine atom, and an iodine atom.
The solid electrolyte raw material containing a halogen atom is preferably selected depending on the kind of the sulfide solid electrolyte to be obtained, and for example, in the case where a sulfide solid electrolyte having a thio-LISICON Region II-type crystal structure is to be obtained, it is further preferred to use bromine ($Br_2$) and iodine ($I_2$) in the elemental halogen, and it is further preferred to use lithium bromide and lithium iodide in the lithium halide. In the case where a sulfide solid electrolyte having an argyrodite type crystal structure is to be obtained, it is further preferred to use bromine ($Br_2$) and chlorine ($Cl_2$) in the elemental halogen, and it is further preferred to use lithium chloride and lithium bromide in the lithium halide. The solid electrolyte raw materials containing a halogen atom each may be used alone, or multiple kinds thereof may be used in combination, in which it is preferred to use multiple kinds thereof in combination.
Preferred examples of the combination of the solid electrolyte raw materials contained in the raw material-containing material include a combination of lithium sulfide, phosphorus sulfide, and a lithium halide, a combination of lithium sulfide, phosphorus sulfide, and an elemental halogen, and a combination of lithium sulfide, phosphorus sulfide, a lithium halide, and an elemental halide, and more preferred examples thereof include a combination of lithium sulfide, diphosphorus pentasulfide, and a lithium halide, and a combination of lithium sulfide, diphosphorus pentasulfide, and an elemental halogen. In the combinations above, the lithium halide is preferably lithium chloride, lithium bromide, and lithium iodide, and the elemental halogen is preferably chlorine, bromine, and iodine. The fact that the solid electrolyte raw material containing a halogen atom can be selected depending on the kind of the sulfide solid electrolyte to be obtained has been described above.

Examples of the solid electrolyte raw material also include a phosphorus halide, such as various kinds of a phosphorus fluoride (e.g., $PF_3$ and $PF_5$), various kinds of a phosphorus chloride (e.g., $PCl_3$, $PCl_5$, and $P_2Cl_4$), various kinds of a phosphorus bromide (e.g., $PBr_3$ and $PBr_5$), and various kinds of a phosphorus iodide (e.g., $PI_3$ and $P_2I_4$); and a thiophosphoryl halide, such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichlorofluoride ($PSCl_2F$), and thiophosphoryl dibromofluoride ($PSBr_2F$).

Examples of the solid electrolyte raw material also include a solid electrolyte raw material containing at least one kind of an atom selected from the aforementioned atoms and also containing an atom other than the atoms, more specifically include a lithium compound, such as lithium oxide, lithium hydroxide, and lithium carbonate; an alkali metal sulfide, such as sodium sulfide, potassium sulfide, rubidium sulfide, and cesium sulfide; a metal sulfide, such as silicon sulfide, germanium sulfide, boron sulfide, gallium sulfide, tin sulfide (e.g., SnS and $SnS_2$), aluminum sulfide, and zinc sulfide; a phosphoric acid compound, such as sodium phosphate and lithium phosphate; a halide of an alkali metal other than lithium, such as sodium halides, e.g., sodium iodide, sodium fluoride, sodium chloride, and sodium bromide; a metal halide, such as an aluminum halide, a silicon halide, a germanium halide, an arsenic halide, a selenium halide, a tin halide, an antimony halide, a tellurium halide, and a bismuth halide; and a phosphorus oxyhalide, such as phosphorus oxychloride ($POCl_3$) and phosphorus oxybromide ($POBr_3$).

In the case where an oxygen atom is to be introduced to the solid electrolyte, lithium oxide, lithium hydroxide, and a phosphoric acid compound, such as lithium phosphate, are preferred.

In the present embodiment, $Li_3PS_4$ having a $PS_4$ structure can also be used as the solid electrolyte raw material. Specifically, it suffices that $Li_3PS_4$ is prepared, for example, produced in advance, and then used as the raw material. In this case, preferred examples of the combination of the solid electrolyte raw materials contained in the raw material-containing material include a combination of $Li_3PS_4$ and a lithium halide described above, a combination of $Li_3PS_4$ and an elemental halogen described above, and a combination of $Li_3PS_4$, and a lithium halide and an elemental halogen described above.

The content of $Li_3PS_4$ based on the total of the raw materials is preferably 60 to 100% by mole, more preferably 65 to 90% by mole, and further preferably 70 to 80% by mole. In the case where $Li_3PS_4$ and an elemental halogen are used, the content of the elemental halogen with respect to $Li_3PS_4$ is preferably 1 to 50% by mole, more preferably 10 to 40% by mole, further preferably 20 to 30% by mole, and still further preferably 22 to 28% by mole.

The solid electrolyte raw material, such as lithium sulfide, used in the present embodiment is preferably in the form of particles.

The average particle diameter ($D_{50}$) of the particles of the solid electrolyte raw material is preferably 0.1 to 1,000 μm, more preferably 0.5 to 100 μm, and further preferably 1 to 20 μm. In the description herein, the average particle diameter ($D_{50}$) is a particle diameter reaching 50% (volume basis) of all the particles in sequential cumulation from the smallest particles on the particle diameter distribution cumulative curve, and the volume distribution is based on an average particle diameter that can be measured, for example, with a laser diffraction-scattering particle diameter distribution measuring device. The solid raw materials among the raw materials exemplified above each preferably have an average particle diameter similar to the lithium sulfide particles, and specifically, preferably have an average particle diameter within the same range as the average particle diameter of the lithium sulfide particles.

In the case where the raw material-containing material contains lithium sulfide, diphosphorus pentasulfide, and a lithium halide, the proportion of lithium sulfide with respect to the total of lithium sulfide and diphosphorus pentasulfide is preferably 60% by mole or more, more preferably 65% by mole or more, further preferably 70% by mole or more, and still further preferably 74% by mole or more, and the upper limit thereof is preferably 85% by mole or less, more preferably 83% by mole or less, and further preferably 80% by mole or less, from the standpoint of providing the higher chemical stability and the standpoint of providing a higher ionic conductivity. The range thereof is representatively preferably 60 to 85% by mole, more preferably 65 to 83% by mole, further preferably 70 to 80% by mole, and still further preferably 74 to 80% by mole.

In the case where a sulfide solid electrolyte having a thio-LISICON Region II-type crystal structure is to be obtained, the range thereof is particularly preferably 74 to 78.5% by mole, 74 to 78% by mole, or 74 to 76% by mole, in addition to the aforementioned ranges, and in the case where a sulfide solid electrolyte having an argyrodite type crystal structure is to be obtained, the range thereof is particularly preferably 76 to 83% by mole, 77 to 80% by mole, or 78 to 80% by mole, in addition to the aforementioned ranges.

In the case where the raw material-containing material contains lithium sulfide, diphosphorus pentasulfide, a lithium halide, and the additional raw material used depending on necessity, the content of lithium sulfide and diphosphorus pentasulfide with respect to the total of these materials is preferably 50% by mole or more, more preferably 55% by mole or more, and further preferably 60% by mole or more, and the upper limit thereof is preferably 100% by mole or less, more preferably 90% by mole or less, further preferably 85% by mole or less, and still further preferably 80% by mole or less. The range thereof is representatively preferably 50 to 100% by mole, more preferably 55 to 90% by mole, further preferably 60 to 85% by mole, and still further preferably 60 to 80% by mole.

In the case where a sulfide solid electrolyte having a thio-LISICON Region II-type crystal structure is to be obtained, the range thereof is particularly preferably 65 to 90% by mole, 70 to 85% by mole, or 75 to 83% by mole, in addition to the aforementioned ranges, and in the case where a sulfide solid electrolyte having an argyrodite type crystal structure is to be obtained, the range thereof is particularly preferably 50 to 78% by mole, 55 to 70% by mole, or 55 to 65% by mole, in addition to the aforementioned ranges.

In the case where the raw material-containing material contains a combination of lithium bromide and lithium iodide as the lithium halide, the proportion of lithium bromide with respect to the total of lithium bromide and lithium iodide is preferably 1% by mole or more, more preferably 20% by mole or more, further preferably 35% by mole or more, and still further preferably 45% by mole or more, and the upper limit thereof is preferably 99% by mole or less, more preferably 90% by mole or less, further preferably 75% by mole or less, and still further preferably 60% by mole or less, from the standpoint of enhancing the ionic conductivity. The range thereof is representatively preferably 1 to 99% by mole, more preferably 20 to 90% by mole, further preferably 35 to 75% by mole, and still further preferably 45 to 60% by mole.

In the case where a sulfide solid electrolyte having a thio-LISICON Region II-type crystal structure is to be obtained, the range thereof is particularly preferably 40 to 75% by mole, 40 to 65% by mole, or 45 to 55% by mole, in addition to the aforementioned ranges.

In the case where the raw material-containing material contains a combination of lithium bromide and lithium chloride as the lithium halide, the proportion of lithium bromide with respect to the total of lithium bromide and lithium chloride is preferably 1% by mole or more, more preferably 15% by mole or more, further preferably 25% by mole or more, and still further preferably 35% by mole or more, and the upper limit thereof is preferably 99% by mole or less, more preferably 75% by mole or less, further preferably 60% by mole or less, and still further preferably 45% by mole or less, from the standpoint of enhancing the ionic conductivity. The range thereof is representatively preferably 1 to 99% by mole, more preferably 15 to 75% by mole, further preferably 25 to 60% by mole, and still further preferably 35 to 45% by mole.

In the case where a sulfide solid electrolyte having an argyrodite type crystal structure is to be obtained, the range thereof is particularly preferably 25 to 45% by mole, or 35 to 40% by mole, in addition to the aforementioned ranges.

In the case where the raw material-containing material contains an elemental halogen as the raw material, and also contains lithium sulfide and diphosphorus pentasulfide, the proportion of the molar number of lithium sulfide except for the same molar number of lithium sulfide as the molar number of the elemental halogen with respect to the total molar number of lithium sulfide and diphosphorus pentasulfide except for the same molar number of lithium sulfide as the molar number of the elemental halogen is preferably in a range of 60 to 90%, more preferably in a range of 65 to 85%, further preferably in a range of 68 to 82%, still further preferably 72 to 78%, and particularly preferably in a range of 73 to 77%, since a higher ionic conductivity can be obtained with the proportion.

From the same standpoint as above, in the case where the raw material-containing material contains lithium sulfide, diphosphorus pentasulfide, and an elemental halogen, the content of the elemental halogen with respect to the total amount of lithium sulfide, diphosphorus pentasulfide, and the elemental halogen is preferably 1 to 50% by mole, more preferably 2 to 40% by mole, further preferably 3 to 25% by mole, and still further preferably 3 to 15% by mole.

In the case where the raw material-containing material contains lithium sulfide, diphosphorus pentasulfide, an elemental halogen, and a lithium halide, the content ($\alpha$% by mole) of the elemental halogen and the content ($\beta$% by mole) of the lithium halide with respect to the total amount of lithium sulfide, diphosphorus pentasulfide, the elemental halogen, and the lithium halide preferably satisfy the following expression (2), more preferably satisfy the following expression (3), further preferably satisfy the following expression (4), and still further preferably satisfy the following expression (5):

$$2 \leq 2\alpha + \beta \leq 100 \qquad (2)$$

$$4 \leq 2\alpha + \beta \leq 80 \qquad (3)$$

$$6 \leq 2\alpha + \beta \leq 50 \qquad (4)$$

$$6 \leq 2\alpha + \beta \leq 30 \qquad (5)$$

In the case where the raw material-containing material contains two kinds of halogens as elemental materials, assuming that the molar number of one of the halogen atoms in the substance is shown by A1, and the molar number of the other halogen atoms in the substance is shown by A2, the ratio A1/A2 is preferably 1 to 99/99 to 1, more preferably 10/90 to 90/10, further preferably 20/80 to 80/20, and still further preferably 30/70 to 70/30.

In the case where the raw material-containing material contains two kinds of elemental halogens, and the two kinds of elemental halogens are bromine and iodine, assuming that the molar number of bromine is shown by A1, and the molar number of iodine is shown by A2, the ratio A1/A2 is preferably 1/99 to 99/1, more preferably 20/80 to 80/20, further preferably 35/65 to 80/20, and still further preferably 45/55 to 70/30.

In the two kinds of elemental halogens are bromine and chlorine, assuming that the molar number of bromine is shown by B1, and the molar number of chlorine is shown by B2, the ratio B1/B2 is preferably 1/99 to 99/1, more preferably 15/85 to 75/25, further preferably 25/75 to 60/40, and still further preferably 35/45 to 65/55.

In the case where the raw material-containing material contains $Li_3PS_4$, the content of $Li_3PS_4$ with respect to the total of the raw materials contained in the raw material-containing material is preferably 60 to 100% by mole, more preferably 65 to 90% by mole, and further preferably 70 to 80% by mole.

As described above, $Li_3PS_4$ may be prepared through production, and in this case, can be obtained by reacting lithium sulfide and diphosphorus pentasulfide at a ratio of 3/1 (molar ratio). In the case where $Li_3PS_4$ is used as the solid electrolyte raw material, for example, the blending ratio thereof with respect to the other raw materials, such as a lithium halide and an elemental halogen, may be determined according to the aforementioned case where lithium sulfide and diphosphorus pentasulfide are used. For example, the reaction of lithium sulfide and diphosphorus pentasulfide at a ratio of 3/1 (molar ratio) results in 2 mol of $Li_3PS_4$, and therefore 2 mol of $Li_3PS_4$ corresponds to the total amount of 4 mol of lithium sulfide and diphosphorus pentasulfide. Accordingly, in the blending ratio in the case where lithium sulfide and diphosphorus pentasulfide are used, the molar number of lithium sulfide and diphosphorus pentasulfide may be applied as twice the amount of $Li_3PS_4$ used. In the case where $Li_3PS_4$ and an elemental halogen are used, the amount of the elemental halogen used with respect to $Li_3PS_4$ is preferably 1 to 50% by mole, more preferably 10 to 40% by mole, further preferably 20 to 30% by mole, and still further preferably 22 to 28% by mole.

[Poor Solvent]

The poor solvent used in the present embodiment may be selected from solvents having a lower solubility of the raw material-containing material than the solvents having been used for producing solid electrolytes, and becoming the form of slurry through mixing with the raw material-containing material, and preferably contains a complexing agent that easily forms a complex with the solid electrolyte raw material contained in the raw material-containing material.

The complexing agent is a compound that easily forms a complex with the solid electrolyte raw material contained in the raw material-containing material as described above, and for example, is a compound that is capable of forming a complex with lithium sulfide, diphosphorus pentasulfide, and $Li_3PS_4$ (which encompasses that obtained with lithium sulfide and diphosphorus pentasulfide), which are preferably used as the solid electrolyte raw material, and also with the solid electrolyte raw material containing a halogen atom.

The complexing agent used may be any material that has the aforementioned properties with no particular limitation, and a compound containing an atom having high affinity to a lithium atom, for example, a hetero atom, such as a nitrogen atom, an oxygen atom, and a chlorine atom, is particularly preferred, in which more preferred examples thereof include a compound having a group containing the hetero atom, since these hetero atoms and the group containing the hetero atom can be coordinated (bonded) to lithium.

The hetero atom existing in the molecule of the complexing agent has high affinity to a lithium atom, and is considered to have such a property that easily forms a complex by bonding to the solid electrolyte raw material and the like (which may be hereinafter referred simply to as a "complex"). Accordingly, it is considered that a complex is formed by mixing the solid electrolyte raw material and the complexing agent, and easily allows the dispersed state of the solid electrolyte raw material, particularly the dispersed state of the halogen atom, to be homogeneous, and as a result, the sulfide solid electrolyte having a high ionic conductivity can be obtained.

The fact that the complexing agent can form a complex with the solid electrolyte raw material and the like can be confirmed directly, for example, by the infrared absorption spectrum measured by FT-IR analysis (diffuse reflection method).

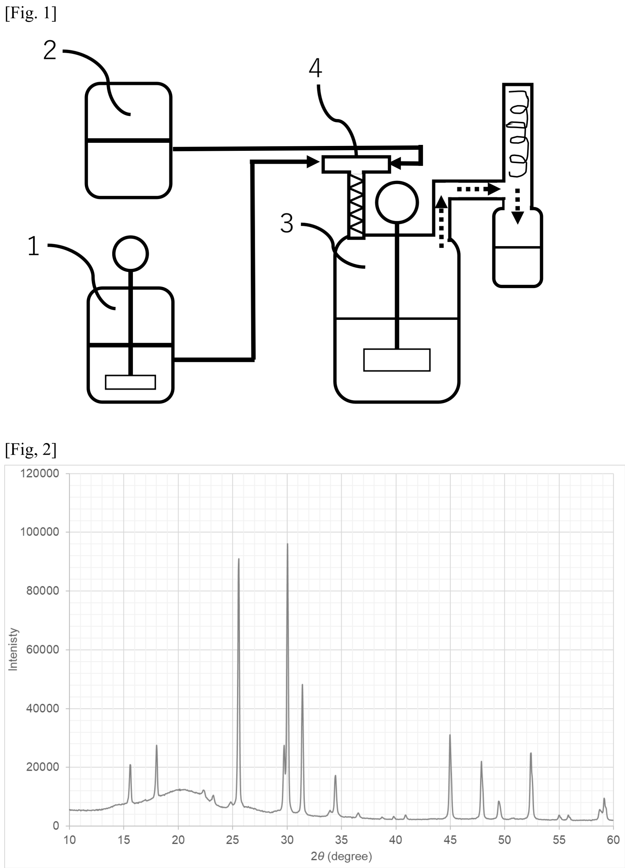

As for the complexing agent, the FT-IR analysis (diffuse reflection method) of powder obtained by agitating tetramethylethylenediamine (which may be hereinafter referred simply to as "TMEDA") as one of the preferred complexing agents and lithium iodide (LiI), and the complexing agent itself reveals that the peak derived from the C-N stretching vibration at 1,000 to 1,250 $cm^{-1}$ is differentiated from that in the spectrum of TMEDA itself. Also, in consideration of the fact that it has been known that agitation and mixing of TMEDA and lithium iodide form a LiI-TMEDA complex (see, for example, Aust. J. Chem., 1988, 41, 1925-34, particularly Fig. 2), it is appropriate to understand that a LiI-TMEDA complex is formed.

For example, furthermore, the FT-IR analysis (diffuse reflection method) of powder obtained by agitating the complexing agent (TMEDA) and $Li_3PS_4$ reveals that the peak derived from the C-N stretching vibration at 1,000 to 1,250 $cm^{-1}$ is differentiated from that in the spectrum of TMEDA itself, but is similar to that in the spectrum of the LiI-TMEDA complex. It can be understood therefrom that a $Li_3PS_4$-TMEDA complex is formed.

The production method of the present embodiment preferably adopts a method for producing a sulfide solid electrolyte, including mixing the raw material-containing material and the complexing agent to provide the first fluid containing the complex, and heating the fluid to remove the complexing agent.

The complexing agent is preferably a compound containing a nitrogen atom and/or an oxygen atom as a hetero atom, in which an amino group is preferred as a group containing a nitrogen atom, and an ether group is preferred as a group containing an oxygen atom. Accordingly, the complexing agent is particularly preferably one or more kind selected from an amine compound and an ether compound.

The amine compound is not particularly limited, as long as being a compound having an amino group in the molecule thereof, by which the formation of the complex can be accelerated, and is preferably a compound having at least two amino groups in the molecule thereof. The structure can form the complex by bonding the solid electrolyte raw material and the like through at least two nitrogen atoms in the molecule thereof.

Examples of the amine compound include such amine compounds as an aliphatic amine, an alicyclic amine, a heterocyclic amine, and an aromatic amine, which may be used alone, or multiple kinds thereof may be used in combination.

More specifically, representative preferred examples of the aliphatic amine include an aliphatic diamine, for example, an aliphatic primary diamine, such as ethylenediamine, diaminopropane, and diaminobutane; an aliphatic secondary diamine, such as N,N'-dimethylethylenediamine, N,N'-diethylethylenediamine, N,N'-dimethyldiaminopropane, and N,N'-diethyldiaminopropane; and an aliphatic tertiary diamine, such as N,N,N',N'-tetramethyldiaminomethane, N,N,N',N'-tetramethylethylenediamine, N,N,N',N'-tetraethylethylenediamine, N,N,N',N'-tetramethyldiaminopropane, N,N,N',N'-tetraethyldiaminopropane, N,N,N',N'-tetramethyldiaminobutane, N,N,N',N'-tetramethyldiaminopentane, and N,N,N',N'-tetramethyldimainohexane. In the exemplification in the description herein, for example, diaminobutane encompasses all the isomers thereof including isomers relating to the positions of the amino groups, e.g., 1,2-diaminobutane, 1,3-diaminobutane, and 1,4-diaminobutane, and also isomers for butane, e.g., linear and branched.

The number of carbon atoms of the aliphatic amine is preferably 2 or more, more preferably 4 or more, and further preferably 6 or more, and the upper limit thereof is preferably 10 or less, more preferably 8 or less, and further preferably 7 or less. The number of carbon atoms of the aliphatic hydrocarbon group in the aliphatic amine is preferably 2 or more, and the upper limit thereof is preferably 6 or less, more preferably 4 or less, and further preferably 3 or less.

Representative preferred examples of the alicyclic amine include an alicyclic diamine, for example, an alicyclic primary diamine, such as cyclopropanediamine and cyclohexanediamine; an alicyclic secondary diamine, such as bisaminomethylcyclohexane; and an alicyclic tertiary diamine, such as N,N,N',N'-tetramethylcyclohexanediamine and bis(ethylmethylamino)cyclohexane, and representative preferred examples of the heterocyclic amine include a heterocyclic diamine, for example, a heterocyclic primary diamine, such as isophoronediamine; a heterocyclic secondary diamine, such as piperazine and dipiperidylpropane; and a heterocyclic tertiary diamine, such as N,N-dimethylpiperazine and bismethylpiperidylpropane.

The number of carbon atoms of the alicyclic amine and the heterocyclic amine is preferably 3 or more, and more preferably 4 or more, and the upper limit thereof is preferably 16 or less, and more preferably 14 or less.

Representative preferred examples of the aromatic amine include an aromatic diamine, for example, an aromatic primary diamine, such as phenyldiamine, tolylenediamine, and naphthalenediamine; an aromatic secondary diamine, such as N-methylpheylenediamine, N,N'-dimethylphenylenediamine, N,N'-bismethylphenylphenylenediamine, N,N'-dimethylnaphthalenediamine, and N-naphthylethylenediamine; an aromatic tertiary diamine, such as N,N-dimethylphenylenediamine, N,N,N',N'-tetramethylphenylenediamine, N,N,N',N'-tetramethyldiaminodiphenylmethane, and N,N,N',N'-tetramethylnaphthalenediamine.

The number of carbon atoms of the aromatic amine is preferably 6 or more, more preferably 7 or more, and further preferably 8 or more, and the upper limit thereof is preferably 16 or less, more preferably 14 or less, and further preferably 12 or less.

The amine compound used in the present embodiment may be substituted by a substituent, such as an alkyl group, an alkenyl group, an alkoxy group, a hydroxy group, and a cyano group, and a halogen atom.

While the diamines have been described as specific examples, it should be noted that the amine compound used in the present embodiment is not limited to a diamine, and examples thereof used include a monoamine, for example, trimethylamine, triethylamine, ethyldimethylamine, aliphatic monoamines corresponding to the various kinds of diamines, such as aliphatic diamines described above, a piperidine compound, such as piperidine, methylpiperidine, and tetramethylpiperidine, a pyridine compound, such as pyridine and picoline, a morpholine compound, such as morpholine, methylmorpholine, and thiomorpholine, an imidazole compound, such as imidazole and methylimidazole, an alicyclic monoamine, such as a monoamine corresponding to the alicyclic diamine described above, a heterocyclic monoamine corresponding to the heterocyclic diamine described above, and an aromatic monoamine corresponding to the aromatic diamine described above, and also include a polyamine having 3 or more amino groups, such as diethylenetriamine, N,N',N"-trimethyldiethylenetriamine, N,N,N',N",N"-pentamethyldiethylenetriamine, triethylenetetramine, N,N'-bis((dimethylamino)ethyl)-N,N'-dimethylethylenediamine, hexamethylenetetramine, and tetraethylenepentamine.

Among the above, a tertiary amine having a tertiary amino group as an amino group is preferred, a tertiary

EP 4 657 469 A1

diamine having two tertiary amino groups is more preferred, a tertiary diamine having a tertiary amino group at both ends is further preferred, and an aliphatic tertiary diamine having a tertiary amino group at both ends is still further preferred, from the standpoint of providing a higher ionic conductivity. The aliphatic tertiary diamine having a tertiary amino group at both ends is preferably tetramethylethylenediamine, tetraethylethylenediamine, tetramethyldiaminopropane, or tetraethyldiaminopropane, in which tetramethylethylenediamine and tetramethyldiaminopropane are preferred in consideration of the availability and the like.

A compound having a group containing a nitrogen atom as the hetero atom other than an amino group, for example, a nitro group and an amido group, provides the similar effect.

In the production method of the present embodiment, the complexing agent is also preferably a compound containing an oxygen atom as a hetero atom, in addition to the compound containing a nitrogen atom described above.

The compound containing an oxygen atom is preferably a compound having one or more kind of a functional group selected from an ether group and an ester group as a group containing an oxygen atom, in which a compound having an ether group is particularly preferred. Accordingly, the complexing agent containing an oxygen atom is particularly preferably an ether compound.

Examples of the ether compound include such ether compounds as an aliphatic ether, an alicyclic ether, a heterocyclic ether, and an aromatic ether, which may be used alone, or multiple kinds thereof may be used in combination.

Examples of the aliphatic ether include a monoether, such as dimethyl ether, diethyl ether, diisopropyl ether, dibutyl ether, and tert-butyl methyl ether; a diether, such as dimethoxymethane, dimethoxyethane, diethoxymethane, and diethoxyethane; a polyether having 3 or more ether groups, such as diethylene glycol dimethyl ether (diglyme) and triethylene oxide glycol dimethyl ether (triglyme); and an ether containing a hydroxy group, such as diethylene glycol and triethylene glycol.

The number of carbon atoms of the aliphatic ether is preferably 2 or more, more preferably 3 or more, and further preferably 4 or more, and the upper limit thereof is preferably 10 or less, more preferably 8 or less, and further preferably 6 or less. The number of carbon atoms of the aliphatic hydrocarbon group in the aliphatic ether is preferably 1 or more, and the upper limit thereof is preferably 6 or less, more preferably 4 or less, and further preferably 3 or less.

Examples of the alicyclic ether include ethylene oxide, propylene oxide, tetrahydrofuran, tetrahydropyran, dimethoxytetrahydrofuran, cyclopentyl methyl ether, dioxane, and dioxolane, and examples of the heterocyclic ether include furan, benzofuran, benzopyran, dioxane, dioxin, morpholine, methoxyindole, and hydroxymethyldimethoxypyridine.

The number of carbon atoms of the alicyclic ether and the heterocyclic ether is preferably 3 or more, and more preferably 4 or more, and the upper limit thereof is preferably 16 or less, and more preferably 14 or less.

Examples of the aromatic ether include methyl phenyl ether (anisole), ethyl phenyl ether, dibenzyl ether, diphenyl ether, benzyl phenyl ether, and naphthyl ether.

The number of carbon atoms of the aromatic ether is preferably 7 or more, and more preferably 8 or more, and the upper limit thereof is preferably 16 or less, more preferably 14 or less, and further preferably 12 or less.

The ether compound used in the present embodiment may be substituted by a substituent, such as an alkyl group, an alkenyl group, an alkoxy group, a hydroxy group, and a cyano group, and a halogen atom.

Among the ether compounds, dimethoxyethane and tetrahydrofuran are preferred from the standpoint of providing a higher ionic conductivity.

Examples of the ester compound include such ester compounds as an aliphatic ester, an alicyclic ester, a heterocyclic ester, and an aromatic ester, which may be used alone, or multiple kinds thereof may be used in combination.

More specifically, examples of the aliphatic ester include a formate ester, such as methyl formate, ethyl formate, and triethyl formate, an acetate ester, such as methyl acetate, ethyl acetate, propyl acetate, isopropyl acetate, butyl acetate, and isobutyl acetate, a propionate ester, such as methyl propionate, ethyl propionate, propyl propionate, and butyl propionate, an oxalate ester, such as dimethyl oxalate and diethyl oxalate, a malonate ester, such as dimethyl malonate and diethyl malonate, and a succinate ester, such as dimethyl succinate and diethyl succinate.

The number of carbon atoms of the aliphatic ester is preferably 2 or more, more preferably 3 or more, and further preferably 4 or more, and the upper limit thereof is preferably 10 or less, more preferably 8 or less, and further preferably 7 or less. The number of carbon atoms of the aliphatic hydrocarbon group in the aliphatic ester is preferably 1 or more, and more preferably 2 or more, and the upper limit thereof is preferably 6 or less, more preferably 4 or less, and further preferably 3 or less.

Examples of the alicyclic ester include methyl cyclohexanecarboxylate, ethyl cyclohexanecarboxylate, dimethyl cyclohexanedicarboxylate, dibutyl cyclohexanedicarboxylate, and dibutyl cyclohexenedicarboxylate, and examples of the heterocyclic ester include methyl pyridinecarboxylate, ethyl pyridinecarboxylate, propyl pyridinecarboxylate, methyl pyrimidinecarboxylate, ethyl pyrimidinecarboxylate, and a lactone compound, such as acetolactone, propiolactone, butyrolactone, and valerolactone.

The number of carbon atoms of the alicyclic ester and the heterocyclic ester is preferably 3 or more, and more preferably 4 or more, and the upper limit thereof is preferably 16 or less, and more preferably 14 or less.

Examples of the aromatic ester include a benzoate ester, such as methyl benzoate, ethyl benzoate, propyl benzoate, and butyl benzoate; a phthalate ester, such as dimethyl phthalate, diethyl phthalate, dibutyl phthalate, butyl benzyl phthalate, and dicyclohexyl phthalate; and a trimellitate ester, such as trimethyl trimellitate, triethyl trimellitate, tripropyl trimellitate, tributyl trimellitate, and trioctyl trimellitate.

The number of carbon atoms of the aromatic ester is preferably 8 or more, and more preferably 9 or more, and the upper limit thereof is preferably 16 or less, more preferably 14 or less, and further preferably 12 or less.

The ester compound used in the present embodiment may be substituted by a substituent, such as an alkyl group, an alkenyl group, an alkoxy group, a hydroxy group, and a cyano group, and a halogen atom.

Among the ester compounds, an aliphatic ester is preferred, an acetate ester is more preferred, and ethyl acetate is particularly preferred, from the standpoint of providing a higher ionic conductivity.

The poor solvent may contain an additional solvent in addition to the complexing agent from the standpoint of suppressing heat generation due to the reaction of the raw material-containing material and the complexing agent.

Preferred examples of the additional solvent include a hydrocarbon solvent, such as an aliphatic hydrocarbon solvent, an alicyclic hydrocarbon solvent, and an aromatic hydrocarbon solvent, from which the additional solvent may be appropriately selected.

More specifically, examples thereof include an aliphatic hydrocarbon solvent, such as hexane, pentane, 2-ethylhexane, heptane, octane, decane, undecane, dodecane, and tridecane; an alicyclic hydrocarbon solvent, such as cyclohexane and methylcyclohexane; and an aromatic hydrocarbon solvent, such as benzene, toluene, xylene, mesitylene, ethylbenzene, tertbutylbenzene, trifluoromethylbenzene, nitrobenzene, chlorobenzene, chlorotoluene, and bromobenzene.

Among the solvents, the additional solvent is preferably an aliphatic hydrocarbon, an alicyclic hydrocarbon, and an aromatic hydrocarbon, in which heptane, cyclohexane, toluene, ethylbenzene, and tridecane are more preferred, and tridecane is particularly preferred, from the standpoint of providing a high ionic conductivity more stably. In the present embodiment, these solvents may be used alone, or multiple kinds thereof may be used in combination.

The content of the complexing agent in the poor solvent is not particularly limited, and for example, is preferably 10 to 90% by volume, more preferably 25 to 75% by volume, and further preferably 40 to 60% by volume.

(Mixing)

In the production method of the present embodiment, the raw material-containing material and the poor solvent are mixed to provide a first fluid.

The ratio of the raw material-containing material and the poor solvent is preferably 1.0 to 25% by mass, more preferably 2.0 to 20% by mass, and further preferably 3.0 to 15% by mass, of the raw material-containing material based on the total amount of the first fluid, from the standpoint of providing the sulfide solid electrolyte having a small particle diameter.

The method of mixing the raw material-containing material and the poor solvent is not particularly limited, and it suffices that the raw material-containing material and the poor solvent are placed in an apparatus capable of mixing the raw material-containing material and the poor solvent, and mixed therein.

In the case where an elemental halogen is used as the solid electrolyte raw material, however, there is a case where the solid electrolyte raw material is not a solid matter, and specifically fluorine and chlorine are in a gaseous state, and bromine is in a liquid state, under ordinary temperature and ordinary pressure. In this case, for example, the solid electrolyte raw material that is in a liquid state may be fed to the tank along with the poor solvent separately from the other solid electrolyte raw material in a solid state, and the solid electrolyte raw material that is in a gaseous state may be fed by blowing into the poor solvent having the solid electrolyte raw material in a solid state added thereto.

In the case where the poor solvent contains multiple components, the order of placing the components is not particularly limited, and for example, it is possible that after mixing the complexing agent and the raw material-containing material, the solvent component, such as a hydrocarbon solvent, is further added and mixed depending on necessity. It is also possible that after mixing the hydrocarbon solvent and the raw material-containing material, the complexing agent is added thereto.

In the production method of the present embodiment, the mixing of the raw material-containing material and the poor solvent may be performed by a method that does not use an apparatus that is generally referred to as a pulverizer used for pulverizing the solid electrolyte raw material, such as a medium type pulverizer, e.g., a ball mill and a bead mill.

For shortening the mixing time for providing the precursor or forming fine powder thereof, the raw material-containing material and the solvent may be pulverized with a pulverizer in mixing them or after mixing them.

Examples of the apparatus of mixing the raw material-containing material and the poor solvent include a mechanical agitation mixer having an agitation blade provided in a tank. Examples of the mechanical agitation mixer include a high-speed agitation mixer and a double arm mixer, in which a high-speed agitation mixer is preferably used from the standpoint of enhancing the homogeneity of the solid electrolyte raw material in the mixture of the solid electrolyte raw material and the poor solvent, providing a higher ionic conductivity. Examples of the high-speed agitation mixer include a vertical rotation mixer and a horizontal rotation mixer, and both types of mixers may be used.

Examples of the shape of the agitation blade used in the mechanical agitation mixer include an anchor type, a blade type, an arm type, a ribbon type, a multi-stage blade type, a double arm type, a shovel type, a double blade type, a flat blade type, and a C-blade type, in which a shovel type, a flat blade type, and a C-blade type are preferred from the standpoint of enhancing the homogeneity of the solid electrolyte raw material, providing a higher ionic conductivity. The mechanical agitation mixer may be equipped with a circulation line that discharges the agitation object to the outside the mixer and then again returns the object to the inside of the mixer. According to the configuration, the raw material having a large specific gravity can be mixed more homogeneously without causing settling and retention.

The position of the circulation line provided is not particularly limited, but it is preferred to provide the circulation line at a position capable of discharging from the bottom of the mixer and returning to the upper part of the mixer. According to the configuration, the solid electrolyte raw material that tends to settle can be easily agitated homogeneously through convection caused by circulation. The return port is preferably provided beneath the liquid surface of the agitation object. According to the configuration, the agitation object can be prevented from slapping and adhering to the wall surface inside the mixer.

The temperature condition in mixing the solid electrolyte raw material and the poor solvent is not particularly limited, and is, for example, -30 to 100°C, preferably -10 to 50°C, and more preferably approximately room temperature (23°C) (for example, room temperature ±5°C). The mixing time may be approximately 0.1 to 150 hours, and from the standpoint of mixing more homogeneously, providing a higher ionic conductivity, is preferably 1 to 120 hours, more preferably 4 to 100 hours, and further preferably 8 to 80 hours.

In the case where the poor solvent contains the complexing agent, a complex is formed with the solid electrolyte raw material and the like and the complexing agent by mixing the solid electrolyte raw material and the complexing agent. More specifically, it is considered that the complex is formed by bonding a lithium atom, a sulfur atom, a phosphorus atom, and a halogen atom contained in the solid electrolyte raw material through and/or not through the complexing agent by the action between the atoms and the complexing agent. Accordingly, in the production method of the present embodiment, it can be understood that the complex obtained by mixing the solid electrolyte raw material and the complexing agent is constituted by the complexing agent, a lithium atom, a sulfur atom, a phosphorus atom, and a halogen atom.

The complex obtained in the present embodiment is not completely dissolved in the complexing agent in a liquid state, but is generally in a solid state, and therefore is obtained in the form of a suspension containing the complex suspended in the solvent containing the complex (i.e., the precursor-containing slurry).

[Providing Precursor-containing Liquid]

The production method of the present embodiment includes mixing the first fluid and a good solvent by using an in-line mixer, so as to provide a precursor-containing solution.

(Good Solvent)

The good solvent used in the present embodiment may be selected from solvents having a higher solubility of the electrolyte precursor contained in the first fluid than the solvents having been used for producing solid electrolytes, and becoming the form of solution through mixing with the first fluid, and specifically an alcohol is preferably used therefor.

(Alcohol)

Examples of the alcohol include a primary or secondary aliphatic alcohol, such as methanol, ethanol, isopropanol, butanol, and 2-ethylhexyl alcohol; a polyhydric alcohol, such as ethylene glycol, propylene glycol, butanediol, and hexanediol; an alicyclic alcohol, such as cyclopentanol, cyclohexanol, and cyclopentylmethanol; an aromatic alcohol, such as butylphenol, benzyl alcohol, phenethyl alcohol, naphthol, and diphenylmethanol; and an alkoxyalcohol, such as methoxyethanol, propoxyethanol, and butoxyethanol.

Among the various kinds of solvents described above, the alcohol is preferably an aliphatic alcohol, more preferably a primary aliphatic alcohol, further preferably a primary aliphatic alcohol having 1 to 8 carbon atoms, still further preferably an alcohol selected from methanol, ethanol, various kinds of propanol, and various kinds of butanol, particularly preferably at least one of methanol and ethanol, and most preferably ethanol.

The in-line mixer is not particularly limited, and may be, for example, a static mixer or a dynamic mixer.

In the in-line mixer, the first fluid is fed to one of the liquid inlet ports, whereas the second fluid is fed to the other of the liquid inlet ports, and the second fluid may further contain a dispersion medium in addition to the good solvent. In the case where the second fluid contains the good solvent and a dispersion medium, the precursor-containing solution obtained by mixing with the first fluid is in a state where the precursor is dispersed in the dispersion medium. By feeding the dispersed matter obtained in this manner to the heat medium, the resulting sulfide solid electrolyte has a smaller particle diameter.

(Dispersion Medium)

The dispersion medium may be any material that is capable of dispersing the precursor, and is preferably a material capable of retaining good quality of the solid electrolyte, and also preferably a material that does not evaporate in evaporating the good solvent described later, and therefore the similar materials as used as a high boiling point liquid medium described later, in which one or more kind selected from a hydrocarbon solvent and an ether compound is preferably used.

The ratio of the first fluid and the second fluid fed to the in-line mixer is not particularly limited, and is preferably 20/80 to 80/20, more preferably 30/70 to 70/30, and further preferably 40/60 to 60/40, in terms of volume ratio, from the standpoint of facilitating the contact and mixing of the two liquids in the vicinity of the in-line mixer.

The content of the good solvent in the second fluid is not particularly limited, and for example, is preferably 20% by mass or more, more preferably 25% by mass or more, and further preferably 35% by mass or more.

In the case where the second fluid contains the dispersion medium, the content of the good solvent and the content of the dispersion medium in the second fluid are not particularly limited, and for example, each are preferably 10 to 90% by mass, more preferably 25 to 75% by mass, and further preferably 35 to 65% by mass.

[Feeding Precursor-containing Solution to Heated Heat Medium]

The production method of the present embodiment includes
feeding the precursor-containing solution to a heat medium that is a liquid or a gas heated to a temperature higher than the boiling point of the good solvent, so as to evaporate the good solvent.

The precursor-containing solution is fed to a heat medium heated to a temperature higher than the boiling point of the good solvent, and thereby the good solvent is removed from the precursor-containing solution, resulting in the sulfide solid electrolyte in the form of particles.

By heating the heat medium to a temperature higher than both the boiling point of the good solvent and the boiling point of the poor solvent, the poor solvent can be evaporated simultaneously with the evaporation of the good solvent.

(Heat Medium)

The heat medium used in the production method of the present embodiment that is heated to a temperature higher than the boiling point of the good solvent may be a gas or a liquid, and in the case where a liquid heat medium is used, a high boiling point liquid heat medium having a boiling point higher than that of the good solvent is used.

It is preferred that the high boiling point liquid heat medium does not react with and does not dissolve the resulting sulfide solid electrolyte in the form of particles, and therefore a hydrocarbon compound is preferably used.

The hydrocarbon compound used as the heat medium may be selected from the solvents exemplified as the additional solvent which may be used in providing the precursor-containing slurry described above, and an ether compound that has a higher boiling point, and is preferably one or more kind selected from a hydrocarbon compound and an ether compound.

Specific examples of the hydrocarbon compound used as the heat medium include the aliphatic hydrocarbon solvents, the alicyclic hydrocarbon solvents, and the aromatic hydrocarbon solvents described for the additional solvent.

Examples of the high boiling point liquid heat medium include an aliphatic hydrocarbon compound that has a number of carbon atoms of preferably 8 or more, and more preferably 10 or more, the upper limit of which is preferably 40 or less, more preferably 20 or less, and further preferably 16 or less, in consideration of facilitating the higher boiling point than the boiling point of the solvent.

Examples of the aliphatic hydrocarbon compound that is preferably used as the high boiling point liquid heat medium include such aliphatic hydrocarbon compounds as octane, 2-ethylhexane, decane, undecane, dodecane, and tridecane.

One kind of the high boiling point liquid heat media exemplified above may be used alone, or multiple kinds thereof may be used in combination.

Specific examples of the gaseous heat medium include an inert gas, such as nitrogen and argon, and hydrogen sulfide and a mixture of an inert gas with hydrogen sulfide may also be used.

Specific examples in the case where the heat medium is a gas include a method of feeding the precursor-containing solution to a spray dryer device.

(Heating)

In the production method of the present embodiment, the heat medium is heated to a temperature higher than the boiling point of the good solvent.

In the case where the good solvent is a mixture containing multiple components, the boiling point of the good solvent means the boiling point of the component having the highest boiling point among the components contained in the good solvent. However, the boiling point of the trace component contained in a proportion of 3.0% by mass or less in the good solvent is not considered.

The heat medium is preferably heated to a temperature higher than the boiling point of the good solvent by 20°C or more, more preferably heated to a temperature higher by 40°C or more, and further preferably heated to a temperature higher by 60°C or more.

The specific temperature to which the heat medium is heated is preferably 100°C or more and 500°C or less, more preferably 120°C or more and 450°C or less, and further preferably 150°C or more and 400°C or less, from the standpoint of efficiently evaporating the good solvent while preventing the precursor from being decomposed.

The pressure condition in feeding the precursor-containing solution to the heated heat medium is not particularly limited, and is preferably ordinary pressure or reduced pressure from the standpoint of efficiently removing the good solvent.

While examples of the specific method of feeding the precursor-containing solution to the heat medium include methods of injecting, dropping, and spraying, it is preferred to reduce the amount of the precursor contained in one drop from the standpoint of forming the resulting sulfide solid electrolyte into fine particles, and therefore, it is preferred to feed the precursor-containing solution to the medium by dropping or spraying, more specific examples of which include a method of injecting or dropping with a tube pump, and a method of spraying through microspraying.

The feeding amount of the precursor-containing solution is preferably a small and constant amount for forming fine and homogeneous particles of the solid electrolyte. The feeding amount may be appropriately regulated depending on the heat medium used, the temperature, and the like, and in the case where the precursor-containing solution is dropped into the heat medium, for example, is preferably approximately 0.1 to 10 mL/min per one feeding port.

(Recovery of Sulfide Solid Electrolyte)

In the production method of the present embodiment, the good solvent is evaporated from the precursor-containing solution in the aforementioned manner, and furthermore, the poor solvent is removed, the dispersion medium is also removed in the case where the dispersion medium is used, and the heat medium is also removed in the case where the liquid heat medium is used, thereby resulting in the sulfide solid electrolyte.

The liquid heat medium has a high boiling point, and therefore is preferably removed through filtration using a glass filter or the like, decantation, or solid-liquid separation using a centrifugal separator or the like. The sulfide solid electrolyte obtained in this manner may be washed by repeating the addition of a low boiling point solvent and the removal thereof through solid-liquid separation, and may be additionally subjected to a drying treatment.

The poor solvent and the dispersion medium that have a low boiling point may be removed through the drying treatment, and those having a high boiling point may be removed in the similar manner as the liquid heat medium described above.

For example, the use of the same substance is used as the dispersion medium and the heat medium is convenient since the heat medium and the dispersion medium can be collectively recycled.

(Drying)

In the production method of the present embodiment, the sulfide solid electrolyte obtained in the manner described above may be subjected to a drying treatment. The drying can remove the poor solvent, the good solvent, the dispersion medium, and the like remaining in the sulfide solid electrolyte. In the case where the poor solvent contains the complexing agent, and the complex containing the complexing agent remains, the complexing agent can be removed from the complex thereby.

The sulfide solid electrolyte obtained in the manner described above may be either an amorphous sulfide solid electrolyte (glass component) or a crystalline sulfide solid electrolyte, which may be appropriately selected depending on desire. In the case where a crystalline sulfide solid electrolyte is to be produced, an amorphous sulfide solid electrolyte obtained through the mixing may be heated to provide a crystalline sulfide solid electrolyte.

Examples of the method of drying include a method of drying by heating with a dryer or the like.

The drying of the sulfide solid electrolyte may be performed under any pressure condition, for example, under increased pressure, under ordinary pressure, or under reduced pressure, and is preferably performed under ordinary pressure or under reduced pressure. In consideration of the drying at a lower temperature, the drying is preferably performed under reduced pressure, particularly in vacuum, by using a vacuum pump or the like.

The temperature condition for the drying may be a temperature that is the boiling point of the poor solvent, the good solvent, or the dispersion medium used depending on necessity, or more. The specific temperature condition cannot be determined unconditionally since it varies depending on the kinds of the good solvent, the poor solvent, and the dispersion medium used, and is preferably 5°C or more, more preferably 10°C or more, and further preferably 15°C or more, and the upper limit thereof is preferably 180°C or less, more preferably 150°C or less, and further preferably 120°C or less.

The pressure condition is preferably under ordinary pressure or under reduced pressure as described above, and in the case of reduced pressure, specifically, the pressure is preferably 85 kPa or less, more preferably 80 kPa or less, and further preferably 70 kPa or less, and the lower limit thereof may be vacuum (0 kPa), and in consideration of the easiness in regulating the pressure, is preferably 1 kPa or more, more preferably 2 kPa or more, and further preferably 3 kPa or more.

(Heating)

In the case where a crystalline sulfide solid electrolyte is to be produced, the production method of the present embodiment may further include heating. In the case where an amorphous sulfide solid electrolyte (glass component) is obtained through the recovery of the sulfide solid electrolyte, a crystalline sulfide solid electrolyte can be obtained by heating, and in the case where a crystalline sulfide solid electrolyte is obtained, a crystalline sulfide solid electrolyte having a further enhanced crystallinity can be obtained.

In the case where the complexing agent is used as the poor solvent, the complex containing the complexing agent is formed, and the complexing agent is removed from the complex by heating to provide a sulfide solid electrolyte, in which depending on the heating condition, either an amorphous material or a crystalline material can be obtained.

The removal of the complexing agent in the electrolyte precursor can be evidenced by the fact that the formation of the electrolyte precursor (complex) with the complexing agent is confirmed by the result of X-ray diffraction pattern, gas chromatography, or the like, and also by the fact that the sulfide solid electrolyte obtained by removing the complexing agent from the electrolyte precursor has the same X-ray diffraction pattern as the sulfide solid electrolyte obtained by the ordinary method using no complexing agent.

As for the heating temperature in the case where an amorphous sulfide solid electrolyte is to be obtained (including the case where the complexing agent is removed from the electrolyte precursor), for example, the heating temperature can be determined depending on the structure of the crystalline sulfide solid electrolyte obtained by heating the amorphous sulfide solid electrolyte. Specifically, in the differential thermal analysis (DTA) of the amorphous sulfide solid electrolyte with a differential thermal analysis device (DTA device) under a temperature rise condition of 10°C/min, the temperature range is preferably 5°C or less, more preferably 10°C or less, and further preferably 20°C or less from the peak top temperature of the exothermic peak observed on the lowest temperature side, and the lower limit thereof is not particularly limited, and may be approximately -40°C or more from the peak top temperature of the exothermic peak observed on the lowest temperature side. Within the temperature range, an amorphous sulfide solid electrolyte (obtained by removing the complexing agent from the electrolyte precursor) can be obtained more efficiently and securely.

The heating temperature for providing an amorphous sulfide solid electrolyte cannot be determined unconditionally since the temperature varies depending on the structure of the resulting crystalline sulfide solid electrolyte, and is generally preferably 135°C or less, more preferably 130°C or less, and further preferably 125°C or less, and the lower limit thereof is not particularly limited, and is preferably 90°C or more, more preferably 100°C or more, and further preferably 105°C or more.

In the case where a crystalline sulfide solid electrolyte is to be obtained, the heating temperature can be determined depending on the structure of the crystalline sulfide solid electrolyte, and is preferably higher than the heating temperature for obtaining an amorphous sulfide solid electrolyte described above. Specifically, in the differential thermal analysis (DTA) of the amorphous sulfide solid electrolyte with a differential thermal analysis device (DTA device) under a temperature rise condition of 10°C/min, the temperature range is preferably 5°C or more, more preferably 10°C or more, and further preferably 20°C or more from the peak top temperature of the exothermic peak observed on the lowest temperature side, and the upper limit thereof is not particularly limited, and may be approximately 40°C or less. Within the temperature range, a crystalline sulfide solid electrolyte can be obtained more efficiently and securely.

The heating temperature for providing a crystalline sulfide solid electrolyte cannot be determined unconditionally since the temperature varies depending on the structure of the resulting crystalline sulfide solid electrolyte, and is generally preferably 130°C or more, more preferably 135°C or more, and further preferably 140°C or more, and the upper limit thereof is not particularly limited, and is preferably 600°C or less, more preferably 550°C or less, and further preferably 500°C or less.

The heating time is not particularly limited, as long as being a time that can provide the amorphous sulfide solid electrolyte or the crystalline sulfide solid electrolyte that are intended to provide, and for example, is preferably 1 minute or more, more preferably 10 minutes or more, further preferably 30 minutes or more, and further preferably 1 hour or more.

The upper limit of the heating time is not particularly limited, and is preferably 24 hours or less, more preferably 10 hours or less, further preferably 5 hours or less, and still further preferably 3 hours or less.

The heating is preferably performed in an inert gas atmosphere (for example, a nitrogen atmosphere or an argon atmosphere) or in a reduced pressure atmosphere (particularly in vacuum). For example, an inert gas atmosphere containing a certain concentration of hydrogen may also be used. The crystalline sulfide solid electrolyte can be prevented thereby from being deteriorated (for example, oxidized).

The method of heating is not particularly limited, and examples thereof include a hot plate, a vacuum heater, an argon gas atmosphere furnace, and a firing furnace. In the industrial scale, a horizontal dryer, a horizontal vibrating fluidized dryer, or the like having a heating unit and a feeding mechanism may be used and can be selected depending on the processing amount for heating.

(Period of Time from In-line Mixer to Heat Medium)

In the production method of the present embodiment, it is preferred that the contact time of the solid electrolyte raw material and the good solvent is a certain period or less from the standpoint of suppressing the side reaction, enhancing the quality of the resulting sulfide solid electrolyte.

Specifically, the contact time (T) defined by the following expression (1) is preferably 20 minutes or less, more preferably 10 minutes or less, and further preferably 5 minutes or less.

$$T = (A_0 \times L_0 + A_1 \times L_1 + A_2 \times L_2 + ...)/(Q_a + Q_b) \qquad (1)$$

T: contact time (min)
$A_0$: cross sectional area of in-line mixer (cm$^2$)
$L_0$: length of in-line mixer (m)
$A_1$: cross sectional area of piping 1 (cm$^2$)
$L_1$: length of piping 1 (m)
$A_2$: cross sectional area of piping 2 (cm$^2$)
$L_2$: length of piping 2 (m)
...
$Q_a$: inward flow rate of precursor-containing slurry (cm$^3$/min)
$Q_b$: inward flow rate of good solvent (cm$^3$/min)

The expression (1) shows the ideal contact time under the assumption that there is no disturbance, such as convection, the homogeneous mixing occurs at the inlet port of the in-line mixer, and the precursor-containing solution fed to the heat medium is instantaneously dried.

The piping 1, the piping 2, and the like herein show the entire piping from the outlet port of the in-line mixer to the heat medium, and in the case where the heat medium is in the form of liquid, and the heat medium is retained in a heat resistant vessel, show the entire piping from the outlet port of the in-line mixer to the heat resistant vessel, and in the case where the heat medium is in the form of gas, and the precursor-containing solution is fed to a spray dryer device, show the entire piping from the outlet port of the in-line mixer to the spray dryer device.

In the expression (1), $Q_b$ shows the inward flow rate of the good solvent, and in the case where the good solvent is delivered after being mixed with the dispersion medium and the like, shows the entire inward flow rate including the dispersion medium and the like.

(Amorphous Sulfide Solid Electrolyte)

The sulfide solid electrolyte obtained by the production method of the present embodiment may be either an amorphous sulfide solid electrolyte or a crystalline sulfide solid electrolyte.

The amorphous sulfide solid electrolyte obtained by the production method of the present embodiment contains a lithium atom, a sulfur atom, and a phosphorus atom, and preferably contains a lithium atom, a sulfur atom, a phosphorus atom, and a halogen atom, and representative preferred examples thereof include a solid electrolyte constituted by lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr; and a solid electrolyte further contains an additional atom, such as an oxygen atom and a silicon atom, such as $Li_2S$-$P_2S_5$-$Li_2O$-LiI and $Li_2S$-$SiS_2$-$P_2S_5$-LiI. From the standpoint of providing a higher ionic conductivity, an amorphous sulfide solid electrolyte constituted by lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr, is preferred.

The kinds of the atoms constituting the amorphous sulfide solid electrolyte can be confirmed, for example, with an ICP emission spectroscopic analyzer or the like.

(Crystalline Sulfide Solid Electrolyte)

The crystalline sulfide solid electrolyte obtained by the production method of the present embodiment may be so-called glass ceramics obtained by heating the amorphous sulfide solid electrolyte to the crystallization temperature or higher, and examples of the crystal structure thereof include an $Li_3PS_4$ crystal structure, an $Li_4P_2S_6$ crystal structure, an $Li_7PS_6$ crystal structure, an $Li_7P_3S_{11}$ crystal structure, and a crystal structure having peaks at around $2\theta = 20.2°$ and around 23.6° (see, for example, JP 2013-16423 A).

Examples of the crystal structure also include an $Li_{4-x}Ge_{1-x}P_xS_4$-based thio-LISICON Region II-type crystal structure (see Kanno, et al., Journal of The Electrochemical Society, 148 (7) A742-746 (2001)) and a crystal structure similar to the $Li_{4-x}Ge_{1-x}P_xS_4$-based thio-LISICON Region II-type crystal structure (see Solid State Ionics, 177 (2006), 2721-2725). Among the above, the crystal structure of the crystalline sulfide solid electrolyte obtained by the method for producing a solid electrolyte of the present embodiment is preferably a thio-LISICON Region II-type crystal structure since a higher ionic conductivity can be obtained. The "thio-LISICON Region II-type crystal structure" shows any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type crystal structure.

The crystalline sulfide solid electrolyte obtained by the production method of the present embodiment may contain the thio-LISICON Region II-type crystal structure or may contain the same crystal structure as a main crystal, and preferably contains as a main crystal from the standpoint of providing a higher ionic conductivity. In the description herein, the expression "containing as a main crystal" means that the proportion of the target crystal structure in the crystal structures is 80% or more, which is preferably 90% or more, and more preferably 95% or more. It is preferred that the crystalline sulfide solid electrolyte obtained by the production method of the present embodiment does not contain crystalline $Li_3PS_4$ ($\beta$-$Li_3PS_4$) from the standpoint of providing a higher ionic conductivity.

In the X-ray diffractometry using a CuK$\alpha$ line, the diffraction peaks of the $Li_3PS_4$ crystal structure appear, for example, at around $2\theta = 17.5°$, 18.3°, 26.1°, 27.3°, and 30.0°; the diffraction peaks of the $Li_4P_2S_6$ crystal structure appear, for example, at around $2\theta = 16.9°$, 27.1°, and 32.5°; the diffraction peaks of the $Li_7PS_6$ crystal structure appear, for example, at around $2\theta = 15.3°$, 25.2°, 29.6°, and 31.0°; the diffraction peaks of the $Li_7P_3S_{11}$ crystal structure appear, for example, at around $2\theta = 17.8°$, 18.5°, 19.7°, 21.8°, 23.7°, 25.9°, 29.6°, and 30.0°; the diffraction peaks of the $Li_{4-x}Ge_{1-x}P_xS_4$-based thio-LISICON Region II-type crystal structure appear, for example, at around $2\theta = 20.1°$, 23.9°, and 29.5°; and the diffraction peaks of the crystal structure similar to the $Li_{4-x}Ge_{1-x}P_xS_4$-based thio-LISICON Region II-type crystal structure appear, for example, at around $2\theta = 20.2$ and 23.6°. The positions of the peaks each may vary within a range of $\pm 0.5°$.

Preferred examples also include a crystalline sulfide solid electrolyte having an argyrodite type crystal structure having the $Li_7PS_6$ structural skeleton in which a part of P is substituted by Si.

Examples of the compositional formula of the argyrodite type crystal structure include a crystal structure represented by compositional formulae $Li_{7-x}P_{1-y}Si_yS_6$ and $Li_{7+x}P_{1-y}Si_yS_6$ (x is -0.6 to 0.6, y is 0.1 to 0.6). The argyrodite type crystal structure represented by the compositional formulae is a cubic crystal or an orthorhombic crystal, and preferably a cubic crystal, and has peaks mainly appearing at positions of $2\theta = 15.5°$, 18.0°, 25.0°, 30.0°, 31.4°, 45.3°, 47.0°, and 52.0° in the X-ray diffractometry using a CuK$\alpha$ line.

Examples of the compositional formula of the argyrodite type crystal structure also include a compositional formula $Li_{7-x-2y}PS_{6-x-y}Cl_x$ ($0.8 \leq x \leq 1.7$, $0 < y \leq -0.25x+0.5$). The argyrodite type crystal structure represented by the compositional formula is preferably a cubic crystal, and has peaks mainly appearing at positions of $2\theta = 15.5°$, 18.0°, 25.0°, 30.0°, 31.4°, 45.3°, 47.0°, and 52.0° in the X-ray diffractometry using a CuK$\alpha$ line.

Examples of the compositional formula of the argyrodite type crystal structure also include a compositional formula $Li_{7-x}PS_{6-x}Ha_x$ (Ha is Cl or Br, x is preferably 0.2 to 1.8). The argyrodite type crystal structure represented by the compositional formula is preferably a cubic crystal, and has peaks mainly appearing at positions of $2\theta = 15.5°$, 18.0°, 25.0°, 30.0°, 31.4°, 45.3°, 47.0°, and 52.0° in the X-ray diffractometry using a CuK$\alpha$ line.

The positions of the peaks may vary within the range of $\pm 0.5°$.

(Properties of Sulfide Solid Electrolyte)

The form of the sulfide solid electrolyte obtained by the production method of the present embodiment is a form of particles.

The average particle diameter ($D_{50}$) of the sulfide solid electrolyte in the form of particles is, for example, 0.01 $\mu$m or more, 0.03 $\mu$m or more, 0.05 $\mu$m or more, or 0.1 $\mu$m or more, and the upper limit thereof is preferably 30 $\mu$m or less, more preferably 20 $\mu$m or less, and further preferably 15.0 $\mu$m or less. The sulfide solid electrolyte obtained by the production method of the present embodiment has a small particle diameter within the range described above by allowing the ratio of the raw material-containing material and the solvent to be the certain value or less.

Consequently, the production method of the present embodiment is not necessary to include pulverization (into fine particles).

(Application)

The sulfide solid electrolyte obtained by the production method of the present embodiment is excellent in coating suitability and can be applied to the production of batteries without the use of a solvent or the like, and therefore can efficiently exhibit excellent battery capabilities. Furthermore, the sulfide solid electrolyte has a high ionic conductivity and excellent battery capabilities, and therefore can be favorably applied to batteries.

The sulfide solid electrolyte obtained by the production method of the present embodiment may be used in a positive electrode layer, may be used in a negative electrode layer, and may be used in an electrolyte layer. These layers can be produced by known methods.

The battery preferably uses a collector in addition to the positive electrode layer, the electrolyte layer, and the negative electrode layer, and a known collector may be used therefor. Examples thereof used include Au, Pt, Al, Ti, and a layer of a material, such as Cu, reacting with the solid electrolyte covered with Au or the like.

[Apparatus for producing Sulfide Solid Electrolyte]

The first apparatus for producing a sulfide solid electrolyte of the present embodiment is an apparatus for producing a sulfide solid electrolyte, including: a first vessel including a mixing unit, mixing a raw material-containing material containing a lithium atom, a phosphorus atom, and a sulfur atom, and a poor solvent, and retaining a resulting first fluid; a second vessel retaining a second fluid containing a good solvent; a third vessel retaining a heat medium that is a liquid; and an in-line mixer, the in-line mixer being connected to be able to mix the first fluid fed from the first vessel and the second fluid fed from the second container and to feed a resulting mixture to the third vessel.

In the first apparatus for producing a sulfide solid electrolyte, the raw material-containing material preferably further contains a halogen atom.

The second apparatus for producing a sulfide solid electrolyte of the present embodiment is an apparatus for producing a sulfide solid electrolyte, including: a first vessel including a mixing unit, mixing a raw material-containing material containing a lithium atom, a phosphorus atom, and a sulfur atom, and a poor solvent, and retaining a resulting first fluid; a second vessel retaining a second fluid containing a good solvent; a flash dryer; and an in-line mixer, the in-line mixer being connected to be able to mix the first fluid fed from the first vessel and the second fluid fed from the second container and to feed a resulting mixture to the flash dryer.

In the second apparatus for producing a sulfide solid electrolyte, the raw material-containing material preferably further contains a halogen atom.

The first apparatus for producing a sulfide solid electrolyte of the present embodiment is preferably used for an embodiment using a liquid heat medium in the method for producing a sulfide solid electrolyte of the present embodiment. Fig. 1 shows the first apparatus for producing a sulfide solid electrolyte of the present embodiment.

The first vessel 1 is a vessel retaining the first fluid, and corresponds to the device for mixing the raw material-containing material and the poor solvent in the production method of the present embodiment described above. The first vessel 1 preferably includes an agitation blade for making the first fluid homogeneous as described above.

The second vessel 2 is for retaining the second fluid. As shown in Fig. 1, the first vessel 1 is connected to one of the liquid inlet ports of the in-line mixer 4 via the piping, and the second vessel 2 is connected to the other of the liquid inlet ports of the in-line mixer 4 via the piping. According to the configuration, the first fluid and the second fluid can be fed to the in-line mixer 4.

The first apparatus for producing a sulfide solid electrolyte of the present embodiment further include the third vessel 3, and the third vessel 3 retains the liquid heat medium. The liquid outlet port of the in-line mixer 4 is connected to the third vessel 3. According to the configuration, the precursor-containing solution obtained by mixing in the in-line mixer can be fed to the heat medium retained in the third vessel 3. The subsequent operations are the same as in the production method of the present embodiment described above.

The second apparatus for producing a sulfide solid electrolyte of the present embodiment is preferably used for an embodiment using a gaseous heat medium in the method for producing a sulfide solid electrolyte of the present embodiment.

The details of the terms in the first and second apparatuses for producing a sulfide solid electrolyte of the present embodiment are the same as in the method for producing a sulfide solid electrolyte of the present embodiment described above.

Examples

The present invention will be described specifically with reference to examples below, but the present invention is not limited to the examples.

(Measurement of Particle Diameter Distribution)

The particle diameter distribution was measured with a laser diffraction-scattering particle diameter distribution measuring device ("Partica LA-950 (model number)", available from Horiba, Ltd.). Specifically, a mixture of toluene (guaranteed reagent, available from Wako Pure Chemical Industries, Ltd.) and tert-butyl alcohol (guaranteed reagent, available from Wako Pure Chemical Industries, Ltd.) having been dehydrated at a mass ratio of 93.8/6.2 was used as a dispersion medium. After charging 50 mL of the dispersion medium in the flow cell of the device, and circulating, the powder of the measurement object was added and subjected to an ultrasonic treatment, and then the particle diameter distribution was measured.

The average particle diameter ($D_{50}$) is a particle diameter reaching 50% (volume basis) of the entire particles in sequential cumulation from the particle having the smallest particle diameter on the cumulative curve of the particle diameter distribution.

(Measurement of Ionic Conductivity)

Using each of the powder of the sulfide solid electrolytes obtained in Examples and Comparative examples, a circular pellet having a diameter of 6 to 10 mm (cross sectional area S: 0.283 to 0.785 $cm^2$) and a height (L) of 0.1 to 0.3 cm was molded to prepare a specimen. Electrode terminals were connected to the top and the bottom of the specimen, and the ionic conductivity was measured at 25°C by the alternate current impedance method (frequency range: 1 MHz to 0.1 Hz, amplitude: 10 mV) to provide a Cole-Cole plot. In the vicinity of the right end of the arc observed in the high frequency side region, the real part Z' ($\Omega$) at the point where -Z" ($\Omega$) was minimized was referred to as a bulk resistance R ($\Omega$) of the electrolyte, and the ion conductivity $\sigma$ (S/cm) was calculated according to the following expressions.

$$R = \rho(L/S)$$

$$\sigma = 1/\rho$$

(Powdery X-ray Diffractometry (XRD))

A powder specimen was charged in a groove having a diameter of 20 mm and a depth of 0.2 mm, and floated with a glass article to prepare a specimen. The specimen was sealed with a Kapton film for XRD without contact with air, and measured under the following condition.

Measurement apparatus: D2 Phaser, available from Bruker Corporation

Tube voltage: 30 kV
Tube current: 10 mA
X-ray wavelength: Cu-K$\alpha$ line (1.5418 Å)
Optical system: focusing optics
Slit configuration: solar slit: 4°, divergence slit: 1 mm, K$\beta$ filter (Ni plate)
Detector: semiconductor detector
Measurement range: $2\theta$ = 10 to 60 deg
Step width, scan speed: 0.05 deg, 0.05 deg/seconds

(Example 1)

0.597 g of lithium sulfide, 0.759 g of diphosphorus pentasulfide, 0.289 g of lithium chloride, and 0.356 g of lithium bromide were weighed in an anaerobic glove box, and placed in a first vessel equipped with an agitator, to which 10.4 mL of toluene was added, followed by agitating for 30 minutes, and thereafter 10.1 mL of tetrahydrofuran (THF) was further added thereto, followed by agitating for 24 hours, so as to prepare a first fluid (precursor-containing slurry) (proportion of raw material-containing material: 10.0% by mass).

Subsequently, ethanol as a second fluid was placed in a second vessel.

A separable flask (third vessel) equipped with a static mixer, an agitator, and a condenser was purged with nitrogen gas, in which tridecane was then placed.

Thereafter, the first vessel and the second vessel each were connected to the static mixer, and then the temperature of tridecane in the third vessel was raised and retained to 210°C.

The precursor-containing slurry in the first vessel and ethanol in the second vessel each were fed to the static mixer at a rate of approximately 1.5 mL/min with a tube pump, and the solution (precursor-containing solution) obtained from the outlet port of the static mixer was added to tridecane in the separable flask in a dropwise manner. As a result, the solvents (toluene, THF, and ethanol) contained in the precursor-containing solution were evaporated, and a solid matter was deposited in tridecane to form a slurry.

The slurry containing tridecane and the solid matter was cooled to 100°C, and then the solid matter was separated through filtration. A washing operation of adding toluene to the separated solid matter, agitating for 30 minutes, and then again separating the solid matter through filtration was performed five times. Thereafter, the solid matter was vacuum dried at room temperature for 1 hour and further vacuum dried at 100°C for 2 hours, and the solid matter (sulfide solid electrolyte) was recovered. The average particle diameter ($D_{50}$) of the resulting solid electrolyte was measured by the method described above, and was 10.4 $\mu$m.

The sulfide solid electrolyte was fired at 430°C for 8 hours to provide a crystalline sulfide solid electrolyte.

The ionic conductivity of the resulting crystalline sulfide solid electrolyte was measured, and was 4.1 mS/cm.

The resulting powder was subjected to powder X-ray diffractometry (XRD) by the method described above. The result is shown in Fig. 2.

(Example 2)

A sulfide solid electrolyte was recovered and fired to provide a crystalline sulfide solid electrolyte in the same manner as in Example 1 except that ethanol (good solvent) and tridecane (dispersion medium) were placed at a mass ratio of 1/1 as the second fluid in the second vessel, the feeding rate from the first vessel was 1.0 mL/min, and the feeding rate from the second vessel was 2.0 mL/min.

The average particle diameter ($D_{50}$) of the resulting sulfide solid electrolyte before firing was measured, and was 1.4 $\mu$m.

The ionic conductivity of the resulting crystalline sulfide solid electrolyte after firing was measured, and was 4.1 mS/cm.

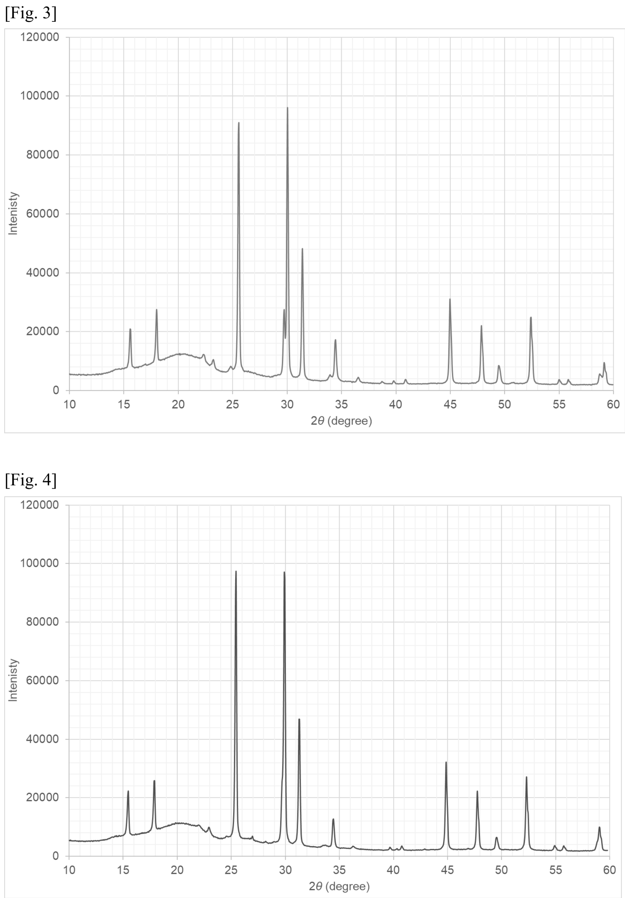

The resulting powder was subjected to powder X-ray diffractometry (XRD) by the method described above. The result is shown in Fig. 3.

(Comparative Example 1)

A crystalline sulfide solid electrolyte was obtained in the same manner as in Example 1 except that a precursor-containing solution was obtained by a batch method of adding the same amount of ethanol directly to the precursor-containing slurry obtained in the same manner as in Example 1 and then agitating the mixture for 1 hour, and was added to tridecane in the separable flask in a dropwise manner at a rate of approximately 3.0 mL/min.

The average particle diameter ($D_{50}$) of the resulting sulfide solid electrolyte before firing was 10.4 $\mu$m, and the ionic conductivity of the crystalline sulfide solid electrolyte after firing was 3.7 mS/cm.

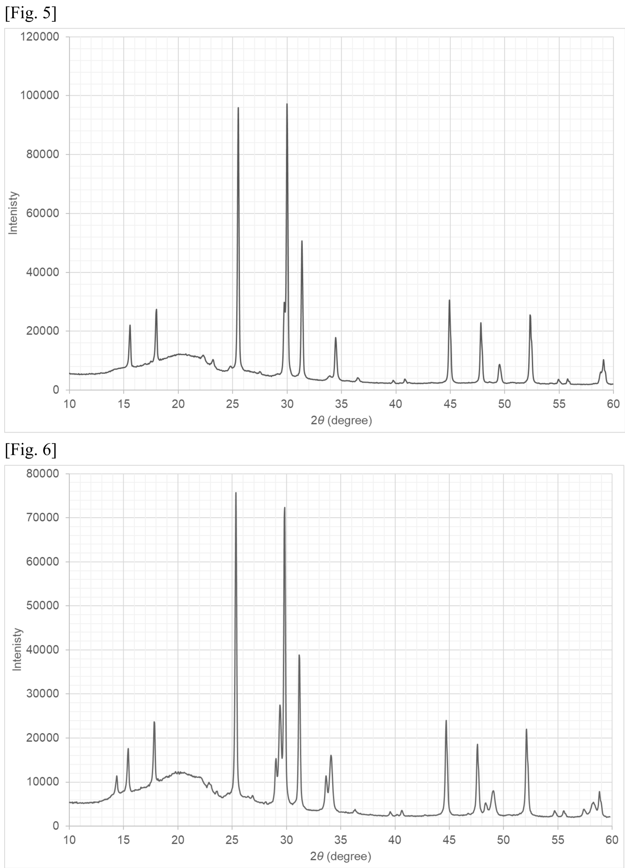

The resulting powder was subjected to powder X-ray diffractometry (XRD) by the method described above. The result is shown in Fig. 5.

(Comparative Example 2)

A crystalline sulfide solid electrolyte was obtained in the same manner as in Comparative Example 1 except that the precursor-containing solution obtained in the same manner as in Comparative Example 1 was vacuum dried at room temperature for 1.0 hour and then vacuum dried at 180°C for 2.0 hour to recover a solid matter.

The resulting solid matter was in the form of film on the bottom surface of the glass vessel used, which was scraped off with a spatula or the like, but was unable to measure the particle diameter. The ionic conductivity of the crystalline sulfide solid electrolyte after firing was 3.1 mS/cm.

The resulting powder was subjected to powder X-ray diffractometry (XRD) by the method described above. The result is shown in Fig. 6.

(Example 3)

59.60 g of lithium sulfide, 75.88 g of diphosphorus pentasulfide, 28.94 g of lithium chloride, and 35.58 g of lithium bromide were weighed in an anaerobic glove box, and placed in a first vessel equipped with an agitation blade, to which 1,038.2 mL of toluene was added, followed by agitating for 1 hour, and thereafter 1,013.5 mL of tetrahydrofuran (THF) was further added thereto, followed by agitating for 72 hours, so as to prepare a first fluid (precursor-containing slurry) (proportion of raw material-containing material: 10.0% by mass).

Subsequently, ethanol (good solvent) and tridecane (dispersion medium) were placed in the second vessel at a mass ratio of 1/1 and dissolved to each other to form the second fluid.

A spray dryer (available from Ohkawara Kakoki Co., Ltd., device name: CNL-3) was connected to the static mixer.

Thereafter, the first vessel and the second vessel each were connected to the static mixer.

The first fluid in the first vessel was fed at a rate of approximately 10 g/min and the second fluid in the second vessel was fed at a rate of 20 g/min each with a tube pump to the static mixer, and the solution (precursor-containing solution) obtained from the outlet port of the static mixer was fed to the spray dryer, and the solvents were dried at a spray pressure of 0.30 MPa and a drying inlet temperature of 200°C, so as to provide a solid matter (sulfide solid electrolyte).

The average particle diameter ($D_{50}$) of the resulting solid electrolyte was measured by the method described above, and was 2.1 μm.

The sulfide solid electrolyte was fired at 430°C for 8 hours to provide a crystalline sulfide solid electrolyte.

The ionic conductivity of the resulting crystalline sulfide solid electrolyte was measured, and was 6.6 mS/cm.

The resulting powder was subjected to powder X-ray diffractometry (XRD) by the method described above. The result is shown in Fig. 4.

(Comparative Example 3)

A crystalline sulfide solid electrolyte was obtained in the same manner as in Example 3 except that a precursor-containing solution was obtained by a batch method of adding the same amount of ethanol directly to the precursor-containing slurry obtained in the same manner as in Example 3 and then agitating for 1 hour, and was fed to the spray dryer at a rate of 30 g/min.

The average particle diameter ($D_{50}$) of the resulting sulfide solid electrolyte before firing was 3.6 μm.

The ionic conductivity of the crystalline sulfide solid electrolyte after firing was 2.4 mS/cm.

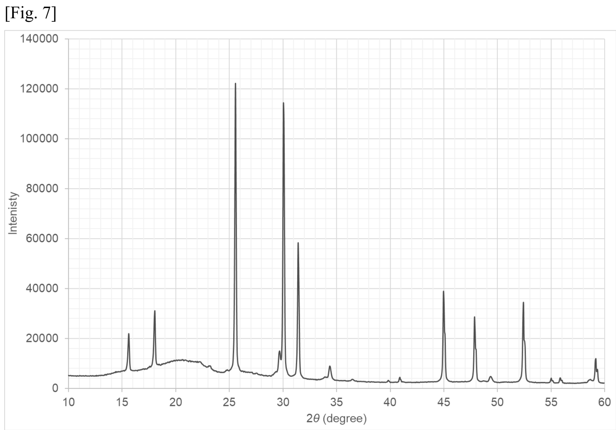

The resulting powder was subjected to powder X-ray diffractometry (XRD) by the method described above. The result is shown in Fig. 7.

The solvents used, the ratios of the raw material-containing material and the solvent, and the properties of the resulting sulfide solid electrolytes in Examples 1 to 3 and Comparative Examples 1 to 3 are shown in Table 1 below.

[Table 1]

Table 1

| | Mixing method of precursor-containing slurry and good solvent | Dispersion medium for good solvent | Heat medium | Properties of sulfide solid electrolyte | |
|---|---|---|---|---|---|
| | | | | Average particle diameter ($D_{50}$) | Ionic conductivity |
| | | | | (μm) | (mS/cm) |
| Example 1 | static mixer | - | tridecane | 10.4 | 4.1 |
| Example 2 | static mixer | tridecane | tridecane | 1.4 | 4.1 |
| Comparative Example 1 | batch method | - | tridecane | 10.4 | 3.7 |
| Comparative Example 2 | batch method | - | - | - | 3.1 |
| Example 3 | static mixer | tridecane | nitrogen gas | 2.1 | 6.6 |
| Comparative Example 3 | batch method | - | nitrogen gas | 3.6 | 2.4 |

It is apparent from the comparison between Examples 1 to 3 and Comparative Examples 1 to 3 that Examples 1 to 3 in which the precursor-containing slurry and the good solvent are mixed with the in-line mixer are improved in the ionic conductivity of the resulting sulfide solid electrolyte. It is apparent from the comparison between Example 1 and Example 2 that in the case where the second fluid contains the dispersion medium in addition to the good solvent, the resulting sulfide solid electrolyte has a smaller particle diameter.

The comparison between the X-ray diffraction spectra of the sulfide solid electrolytes obtained in Examples 1 to 3 shown in Figs. 2 to 4 and the X-ray diffraction spectra of the sulfide solid electrolytes obtained in Comparative Examples 1 to 3 shown in Figs. 5 to 7 confirms that the peaks derived from impurities are reduced in Examples 1 to 3.

Industrial Applicability

The sulfide solid electrolyte obtained by the production method of the present embodiment is favorably applied to batteries used in information-related devices, communication devices, and the like, such as personal computers, video cameras, and mobile phones.

Reference Sign List

1: First vessel
2: Second vessel
3: Third vessel
4: In-line mixer

**Claims**

1. A method for producing a sulfide solid electrolyte, comprising: mixing a raw material-containing material containing a lithium atom, a phosphorus atom, and a sulfur atom, and a poor solvent, so as to provide a first fluid; mixing the first fluid and a second fluid containing a good solvent by using an in-line mixer, so as to provide a precursor-containing solution; and feeding the precursor-containing solution to a heat medium that is a liquid or a gas heated to a temperature higher than a boiling point of the good solvent, so as to evaporate the good solvent.

2. The method for producing a sulfide solid electrolyte according to claim 1, wherein the raw material-containing material further contains a halogen atom.

3. The method for producing a sulfide solid electrolyte according to claim 1 or 2, wherein the good solvent is an alcohol.

4. The method for producing a sulfide solid electrolyte according to any one of claims 1 to 3, wherein the poor solvent contains a complexing agent.

5. The method for producing a sulfide solid electrolyte according to claim 4, wherein the complexing agent is a compound containing a nitrogen atom and/or an oxygen atom as a hetero atom.

6. The method for producing a sulfide solid electrolyte according to any one of claims 1 to 5, wherein the second fluid further contains a dispersion medium.

7. The method for producing a sulfide solid electrolyte according to claim 6, wherein the dispersion medium is one or more kind selected from a hydrocarbon compound and an ether compound.

8. The method for producing a sulfide solid electrolyte according to any one of claims 2 to 7, wherein the halogen atom is one or more kind selected from a chlorine atom, a bromine atom, and an iodine atom.

9. The method for producing a sulfide solid electrolyte according to any one of claims 1 to 8, wherein the heat medium is heated to a temperature higher than a boiling point of the poor solvent, and the precursor-containing solution is fed to the heat medium, so as to also evaporate the poor solvent.

10. The method for producing a sulfide solid electrolyte according to any one of claims 1 to 9, wherein the precursor-containing solution is fed to the heat medium by injecting, dropping, or spraying therein.

11. The method for producing a sulfide solid electrolyte according to any one of claims 1 to 10, wherein the heat medium contains one or more kind selected from a hydrocarbon compound and an ether compound.

12. The method for producing a sulfide solid electrolyte according to any one of claims 1 to 11, wherein a period of time from the mixing of the first fluid and the second fluid to the contact between the precursor-containing solution and the heat medium is 20 minutes or less.

13. An apparatus for producing a sulfide solid electrolyte, comprising: a first vessel including a mixing unit, mixing a raw material-containing material containing a lithium atom, a phosphorus atom, and a sulfur atom, and a poor solvent, and retaining a resulting first fluid; a second vessel retaining a second fluid containing a good solvent; a third vessel retaining a heat medium that is a liquid; and an in-line mixer, the in-line mixer being connected to be able to mix the first fluid fed from the first vessel and the second fluid fed from the second container and to feed a resulting mixture to the third vessel.

14. The apparatus for producing a sulfide solid electrolyte according to claim 13, wherein the raw material-containing material further contains a halogen atom.

15. An apparatus for producing a sulfide solid electrolyte, comprising: a first vessel including a mixing unit, mixing a raw material-containing material containing a lithium atom, a phosphorus atom, and a sulfur atom, and a poor solvent, and retaining a resulting first fluid; a second vessel retaining a second fluid containing a good solvent; a flash dryer; and an in-line mixer, the in-line mixer being connected to be able to mix the first fluid fed from the first vessel and the second fluid fed from the second container and to feed a resulting mixture to the flash dryer.

16. The apparatus for producing a sulfide solid electrolyte according to claim 15, wherein the raw material-containing material further contains a halogen atom.

[Fig. 1]

[Fig, 2]

[Fig. 3]

[Fig. 4]

[Fig. 5]

[Fig. 6]

[Fig. 7]

## INTERNATIONAL SEARCH REPORT

| International application No. |
|---|
| **PCT/JP2024/002199** |

### A. CLASSIFICATION OF SUBJECT MATTER

*H01B 13/00*(2006.01)i; *C01B 25/14*(2006.01)i; *H01B 1/06*(2006.01)i; *H01B 1/10*(2006.01)i; *H01M 4/62*(2006.01)i; *H01M 10/052*(2010.01)i; *H01M 10/0562*(2010.01)i

FI: H01B13/00 Z; C01B25/14; H01M10/0562; H01M10/052; H01M4/62 Z; H01B1/06 A; H01B1/10

According to International Patent Classification (IPC) or to both national classification and IPC

### B. FIELDS SEARCHED

Minimum documentation searched (classification system followed by classification symbols)

H01B13/00; C01B25/14; H01B1/06; H01B1/10; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-100069 A (TOYOTA JIDOSHA KABUSHIKI KAISHA) 08 June 2017 (2017-06-08) paragraphs [0015]-[0101] | 1-16 |
| A | JP 2017-18872 A (TOYOTA JIDOSHA KABUSHIKI KAISHA) 26 January 2017 (2017-01-26) paragraphs [0012]-[0062] | 1-16 |
| A | JP 2021-190425 A (IDEMITSU KOSAN CO., LTD.) 13 December 2021 (2021-12-13) paragraphs [0020]-[0154] | 1-16 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 April 2024** | **16 April 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

| | International application No. |
|---|---|
| | **PCT/JP2024/002199** |

| Patent document cited in search report | | | Publication date (day/month/year) | Patent family member(s) | | | Publication date (day/month/year) |
|---|---|---|---|---|---|---|---|
| JP | 2017-100069 | A | 08 June 2017 | US<br>paragraphs [0032]-[0117]<br>CN | 2017/0152150<br><br>106807100 | A1<br><br>A | |
| JP | 2017-18872 | A | 26 January 2017 | US<br>paragraphs [0015]-[0067]<br>CN | 2017/0008808<br><br>106340611 | A1<br><br>A | |
| JP | 2021-190425 | A | 13 December 2021 | US<br>paragraphs [0022]-[0218] | 2021/0376377 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019169459 A

- JP 2013016423 A

**Non-patent literature cited in the description**

- *Aust. J. Chem.*, 1988, vol. 41, 1925-34
- **KANNO et al.** *Journal of The Electrochemical Society*, 2001, vol. 148 (7), A742-746

- *Solid State Ionics*, 2006, vol. 177, 2721-2725